# EUROPEAN PATENT SPECIFICATION

(11) **EP 3 017 531 B1**
(45) Date of publication and mention of the grant of the patent: **01.07.2020**
(21) Application number: 14734926.0
(22) Date of filing: 27.05.2014
(51) Int. Cl.: H02K 21/22, H02K 21/24

(54) **ENGINE UNIT MOUNTABLE IN A VEHICLE COMPRISING A SYNCHRONOUS DRIVE MOTOR**
IN EINEM KFZ MONTIERBARE MOTOREINHEIT UMFASSEND EINEN SYNCHRONEN ANTRIEBSMOTOR
UNITÉ DE MOTEUR MONTABLE DANS UN VÉHICULE COMPRENANT UN MOTEUR SYNCHRONE

(30) Priority: 14.08.2013 JP 2013168421; 21.04.2014 JP 2014087425
(43) Date of publication of application: 11.05.2016
(73) Proprietor: Yamaha Hatsudoki Kabushiki Kaisha, Iwata-shi, Shizuoka 438-8501 (JP)
(72) Inventor: MASUDA, Masahumi, Iwata-shi Shizuoka 438-8501 (JP); HINO, Haruyoshi, Iwata-shi Shizuoka 438-8501 (JP); NISHIKAWA, Takahiro, Iwata-shi Shizuoka 438-8501 (JP)
(74) Representative: Stöckeler, Ferdinand
(86) International application number: PCT/JP2014/064560
(87) International publication number: WO 2015/022803

(56) References cited:
- EP-A1- 1 505 714
- EP-A1- 1 589 639
- EP-A2- 0 982 425
- DE-U1- 29 712 973
- DE-U1- 29 712 973
- GB-A- 2 220 529
- GB-A- 2 220 529
- JP-A- 2013 118 809
- US-A1- 2010 295 406
- Duane Hanselman: "Chapter 1" In: "Brushless Permanent Magnet Motor Design", 1 January 2006 (2006-01-01), Magna Physics Publishing, Lebanon, Ohio, USA, XP055401636, ISBN: 978-1-881855-15-6 pages 1-14,
- Duane Hanselman: "Chapter 10" In: "Brushless Permanent Magnet Motor Design", 1 January 2006 (2006-01-01), Magna Physics Publishing, Lebanon, Ohio, USA, XP055421645, ISBN: 978-1-881855-15-6 pages 229-334,

## Description

### Technical Field

The present invention relates to an engine unit for a vehicle with a synchronous drive motor.

### Background Art

A drive motor is required to have a high torque, a high output, and a small size, all of which should be achieved at a high level. Particularly, the drive motor is most commonly mounted in machinery that is an object to be driven. Therefore, how to achieve a high torque and a high output in spite of the size constraint is an issue.

Each of Patent Literature 1 to 3 discloses a motor that drives a compressor. To achieve a high output, the motors disclosed in the Patent Literature 1 to 3 adopt a configuration in which the number of magnetic pole faces is 2/3 of the number of teeth. A motor configured such that the number of magnetic pole faces is 2/3 of the number of teeth has a low angular velocity ω and a low impedance. This is why the motor configured such that the number of magnetic pole faces is 2/3 of the number of teeth is able to receive a large current supply, which can improve an output of the motor.

In the Patent Literature 1 to 3, a distal end portion of each tooth included in the motor has protruding portions protruding in a circumferential direction. Providing the protruding portions to a tooth can increase the area over which the tooth is opposed to a magnetic pole face, thus increasing the amount of magnetic fluxes received by the tooth. As a result, a torque of the drive motor can be increased.

EP 1 505 714 A1 discloses a dynamo-electric machine comprising a stator having a plurality of twelf salient poles wound with a coil and a rotor fixed with a plurality of permanent magnets comprising 16 poles and disposed to rotate freely on the outer circumference of the rotor.

EP 1 589 639 A1 teaches a magnetogenerator charging system comprising a stator with a plurality of teeth having wound with coils and a rotor comprising a plurality of magnet pole pairs. Each tooth has a radially extending member and an end member having a length larger than the width of the radially extending member. In an example, the magnetogenerator comprises 24 teeth and 32 poles.

### Citation List

### Patent Literature

PTL1: Japanese Patent Application Laid-Open No. 2007-074898
PTL2: Japanese Patent Application Laid-Open No. 11-146584 (1999)
PTL3: Japanese Patent Application Laid-Open No. 2004-135380

### Summary of Invention

### Technical Problem

An object of the present invention is to provide a synchronous drive motor that satisfies a high torque, a high output, and downsizing at a higher level.

### Solution to Problem

To solve the problem described above, the present invention provides an engine unit according to claim 1.

The engine unit comprises (1) a synchronous drive motor comprising:
a stator including a stator core and windings, the stator core including a plurality of teeth that are spaced from each other by a slot formed therebetween with respect to a circumferential direction, the winding extending through the slot, each of the plurality of teeth including a portion wound with the winding; and
a rotor including a permanent magnet part that forms a plurality of magnetic pole faces, the plurality of magnetic pole faces being provided on a surface of the rotor opposed to the stator, the permanent magnet part being arranged radially outside the stator;
each of the plurality of teeth including a distal end portion that is opposed to the magnetic pole face arranged radially outside the stator, the distal end portion having a larger axial thickness than the circumferential width of the distal end portion, an interval between the distal end portions of the teeth adjacent to each other with respect to the circumferential direction being an inter-tooth gap, the inter-tooth gap being equal to or less than a distance between the winding and a back yoke part with respect to a radial direction of the synchronous drive motor, the distal end portion having a smaller circumferential width than a circumferential width of the magnetic pole face, the number of the magnetic pole faces being more than the number of the teeth. When the distal end portion is viewed along a rotation axis of the synchronous drive motor, an outer edge of the winding wound on the tooth with respect to the circumferential direction is located outer than an outer edge of the distal end portion of the tooth with respect to the circumferential direction.

The present inventors have conducted intensive studies about achieving both a high output and a high torque while maintaining the size of a synchronous drive motor. In the course of the studies, the present inventors have changed the way of thinking, to overturn two types of common wisdom that those skilled in the art have about a synchronous drive motor, as described in the (i) and (ii) below.
(i) A synchronous drive motor configured such that the number of magnetic pole faces is 2/3 of the number of teeth has been conventionally used for the reason that, among various types of synchronous drive motors having different ratios of the number of magnetic pole faces to the number of teeth, a motor configured such that the number of magnetic pole faces is 2/3 of the number of teeth has the lowest angular velocity ω. A lower angular velocity ω leads to a lower impedance Z, which allows an increased current to be supplied to the synchronous drive motor. As a result, an output of the synchronous drive motor is improved. An improvement of the output is favorable for the synchronous drive motor. In other words, when the number of magnetic pole faces is more than 2/3 of the number of teeth, the angular velocity ω is high, which results in a reduced output of the synchronous drive motor. This is why setting the number of magnetic pole faces to be more than 2/3 of the number of teeth has been considered unfavorable for the synchronous drive motor. However, the present inventors have overturned this common wisdom and attempted to configure the synchronous drive motor such that the number of magnetic pole faces is more than 2/3 of the number of teeth.
(ii) Conventionally, a distal end portion of a tooth is provided with a protruding portion protruding in a circumferential direction, for the following reason. A tooth having a protruding portion is able to collect a large amount of magnetic fluxes from a magnetic pole face, which contributes to improvement of a torque. The presence of the protruding portion increases the area over which the distal end portion of the tooth is opposed to the magnetic pole face. This improves a permeance coefficient of a permanent magnet part. For example, reducing the thickness of the permanent magnet part to downsize the synchronous drive motor is allowed. Improvement of a torque is also achieved. This is why increasing the size of the protruding portion of the tooth has been considered favorable for the synchronous drive motor. However, the present inventors have overturned this common wisdom and attempted to reduce the size of the protruding portion of the tooth of the synchronous drive motor.

The present inventors have attempted to concurrently overturn both the common wisdom that the number of magnetic pole faces is set to be 2/3 of the number of teeth and the common wisdom that the protruding portion of the tooth has an increased size. As a result, the present inventors have discovered that providing a larger number of magnetic pole faces than the number of teeth and setting the circumferential width of the distal end portion of the tooth to be smaller than the circumferential width of the magnetic pole face enables a high output and a high torque to be satisfied at a high level even under the condition that, for example, the size of the synchronous drive motor is unchanged.

The synchronous drive motor of (1) includes a larger number of magnetic pole faces as compared with a synchronous drive motor configured in a conventional manner such that the number of magnetic pole faces is 2/3 of the number of teeth (hereinafter, sometimes referred to simply as a conventional synchronous drive motor). Therefore, in the synchronous drive motor of (1), as compared with the conventional synchronous drive motor whose size is equal to the size of the synchronous drive motor of (1), the magnetic pole face has a smaller circumferential width. In addition, the circumferential width of the distal end portion of the tooth is smaller than the circumferential width of the magnetic pole face. In the synchronous drive motor, therefore, a decrease in the circumferential width of the distal end portion of the tooth increases an inter-tooth gap that is an interval between the distal end portions of adjacent teeth with respect to the circumferential direction.

Normally, when the circumferential width of the distal end portion decreases, the area over which the distal end portion is opposed to the magnetic pole face is reduced, and therefore the amount of interlinkage magnetic fluxes that are inputted from the magnetic pole face to the tooth and interlinked with the winding is reduced. In this respect, in the synchronous drive motor of (1) in which the magnetic pole face has a smaller circumferential width, a reduction in the area over which the distal end portion is opposed to the magnetic pole face is suppressed even when the circumferential width of the distal end portion decreases. Accordingly, a reduction in the interlinkage magnetic fluxes of the winding, which may otherwise be involved in the small circumferential width of the distal end portion of the tooth, is suppressed. Additionally, the large inter-tooth gap causes less magnetic fluxes to leak through the inter-tooth gap. The decrease in the leakage magnetic fluxes enables, for example, an increase in stator magnetic fluxes that are inputted from the tooth to the magnetic pole face. Thus, the synchronous drive motor of (1) is able to obtain a high torque by, for example, increasing the stator magnetic fluxes with suppression of a decrease in the interlinkage magnetic fluxes of the winding.

In the synchronous drive motor of (1), furthermore, the inter-tooth gap is large, which dramatically improves the degree of freedom in the design of the winding. Accordingly, for example, the number of turns of the winding can be increased to enhance a torque.

As thus far described, the synchronous drive motor of (1) is able to enhance a torque by, for example, increasing the stator magnetic fluxes with suppression of a decrease in the interlinkage magnetic fluxes of the winding or increasing the number of turns of the winding. Accordingly, the synchronous drive motor of (1) is able to improve a torque as compared with the conventional synchronous drive motor whose size is equal to the size of the synchronous drive motor of (1).

In the synchronous drive motor of (1), as described above, the inter-tooth gap is large, so that an inductance L is low. Therefore, even when the number of magnetic pole faces is more than the number of teeth so that the angular velocity ω is high, an AC component ωL of impedance can be maintained. As a result, a current supplied to the synchronous drive motor can be ensured. Since the torque is improved as described above, ensuring the current enables improvement of an output. In the synchronous drive motor of (1), as described above, the degree of freedom in the design of the winding is improved. Thus, for example, adopting a wire having a large diameter for the winding is allowed without causing an increase in the size of the synchronous drive motor. This can reduce a resistance R of the winding. Therefore, by increasing the current supplied to the winding, both a torque and an output can be improved. Thus, the synchronous drive motor of (1) is able to improve an output as compared with the conventional synchronous drive motor whose size is equal to the size of the synchronous drive motor of (1). Which of the torque and the output is to be more highly improved is adjustable by, for example, which of the diameter of the winding and the number of turns of the winding is more highly increased.

In this manner, the synchronous drive motor of (1) is able to improve an output and a torque as compared with the conventional synchronous drive motor whose size is equal to the size of the synchronous drive motor of (1).

The above description explains that the synchronous drive motor of (1) is able to improve an output and a torque as compared with the conventional synchronous drive motor whose size is equal to the size of the synchronous drive motor of (1). Besides, the synchronous drive motor of (1) achieves downsizing as compared with the conventional synchronous drive motor having the same output and the same torque as those of the synchronous drive motor of (1).

Thus, in the synchronous drive motor of (1), a high torque, a high output, and downsizing can be satisfied at a high level.

(2) The synchronous drive motor according to (1), wherein
the stator core includes six or more teeth,
each of the six or more teeth includes a distal end portion that is opposed to the magnetic pole face, and the distal end portion has a smaller circumferential width than the circumferential width of the magnetic pole face, the number of the magnetic pole faces being more than the number of the teeth.

The configuration of (2) is able to suppress an increase in the amount (volume) of the winding of each tooth while sufficiently ensuring the amount (volume) of the windings of the entire synchronous drive motor. Therefore, for example, further increasing the number of turns of the winding or adopting a wire having a larger diameter for the winding is allowed, with suppression of an increase in the size of the synchronous drive motor. As a result, a high torque, a high output, and downsizing can be satisfied at a higher level.

In the synchronous drive motor according to (1) the distal end portion has a smaller circumferential width than the circumferential width of the magnetic pole face and the distal end portion has a larger axial thickness than the circumferential width of the distal end portion.

This configuration allows a reduction in the circumferential width as compared with a configuration in which the axial thickness is equal to or less than the circumferential width, on the condition that, for example, the area of the distal end portion is fixed at a certain value. Therefore, the inter-tooth gap can be ensured more widely. Accordingly, a high torque, a high output, and downsizing can be satisfied at a higher level.

(3) The synchronous drive motor according to any one of (1) to (2), wherein
when the distal end portion is viewed along a rotation axis of the synchronous drive motor, an outer edge of the winding wound on the tooth with respect to the circumferential direction is located outer than an outer edge of the distal end portion of the tooth with respect to the circumferential direction.

The configuration of (3) increases a torque because a large amount of winding is wound on the tooth, as compared with a configuration in which, for example, the outer edge of the winding with respect to the circumferential direction is located within the outer edge of the distal end portion of the tooth with respect to the circumferential direction. Accordingly, a high torque, a high output, and downsizing can be satisfied at a higher level.

In the synchronous drive motor according to (1) the permanent magnet part is arranged radially outside the stator, and each of the teeth includes a distal end portion that is opposed to the magnetic pole face arranged radially outside the stator, and the distal end portion has a smaller circumferential width than a circumferential width of the magnetic pole face, the number of the magnetic pole faces being more than the number of the teeth.

In this configuration, the magnetic pole face is arranged radially outside the stator, and the distal end portion of the tooth is opposed to the magnetic pole face that is provided outside the stator. Therefore, the interval between the distal end portions of adjacent teeth is relatively wider than the interval between proximal portions (located opposite to the distal end portions) of the adjacent teeth. This configuration further increases the degree of freedom in the arrangement of the winding. Accordingly, a high torque, a high output, and downsizing can be satisfied at a higher level.

(4) The synchronous drive motor according to any one of (1) to (3), wherein
the permanent magnet part is formed of a rare-earth magnet,
each of the teeth includes a distal end portion that is opposed to the magnetic pole face formed by the rare-earth magnet, and the distal end portion has a smaller circumferential width than a circumferential width of the magnetic pole face, the number of the magnetic pole faces being more than the number of the teeth.

A rare-earth magnet has high magnetic characteristics, and accordingly is shaped with a small thickness when used. In the configuration of (4), the number of magnetic pole faces is more than the number of teeth. This makes the circumferential width of the magnetic pole face smaller, on the condition that the size of the synchronous drive motor is constant. As a result, an effect that the permeance coefficient is increased due to a small thickness of the magnet is highly exerted. Accordingly, a high torque, a high output, and downsizing can be satisfied at a higher level.

(5) The synchronous drive motor according to any one of (1) to (3), wherein
the permanent magnet part is formed of a ferrite magnet,
each of the teeth includes a distal end portion that is opposed to the magnetic pole face formed by the ferrite magnet, and the distal end portion has a smaller circumferential width than a circumferential width of the magnetic pole face, the number of the magnetic pole faces being more than the number of the teeth.

Magnetic characteristics of the ferrite magnet are lower than the magnetic characteristics of a rare-earth magnet. Thus, for the production of magnetic fluxes almost at the same level as the magnetic fluxes produced by the rare-earth magnet, the permanent magnet part formed of the ferrite magnet needs to have a larger thickness than the thickness of the rare-earth magnet. In the configuration of (5), the number of magnetic pole faces is more than the number of teeth. This makes the circumferential width of the magnetic pole face smaller, on the condition that the size of the synchronous drive motor is constant. A combination of the thickness ensured by the ferrite magnet and the small circumferential width of the magnetic pole face improves the permeance coefficient. Accordingly, a high torque, a high output, and downsizing can be satisfied at a higher level.

(6) An engine unit comprising:
the synchronous drive motor according to any one of (1) to (5); and
a control device configured to supply, to the winding, a drive current that includes a d-axis current component.

In the configuration of (6), the number of magnetic pole faces is more than the number of teeth, and therefore the angular velocity ω is high as compared with the configuration in which the number of magnetic pole faces is equal to or less than the number of teeth. This can maintain impedance even when an inductance decreases in a configuration in which the circumferential width of the distal end portion of the tooth is set smaller than the circumferential width of the magnetic pole face for improvement of an output. Therefore, in a case where a voltage that cancels an electromotive force is generated based on the product of the impedance and a d-axis current, a d-axis current component can be suppressed to a low level. Accordingly, a high torque, a high output, and downsizing can be satisfied at a high level in a high-speed rotation region, too.

### Advantageous Effects of Invention

The present invention is able to provide a synchronous drive motor that satisfies a high torque, a high output, and downsizing at a higher level.

### Brief Description of Drawings

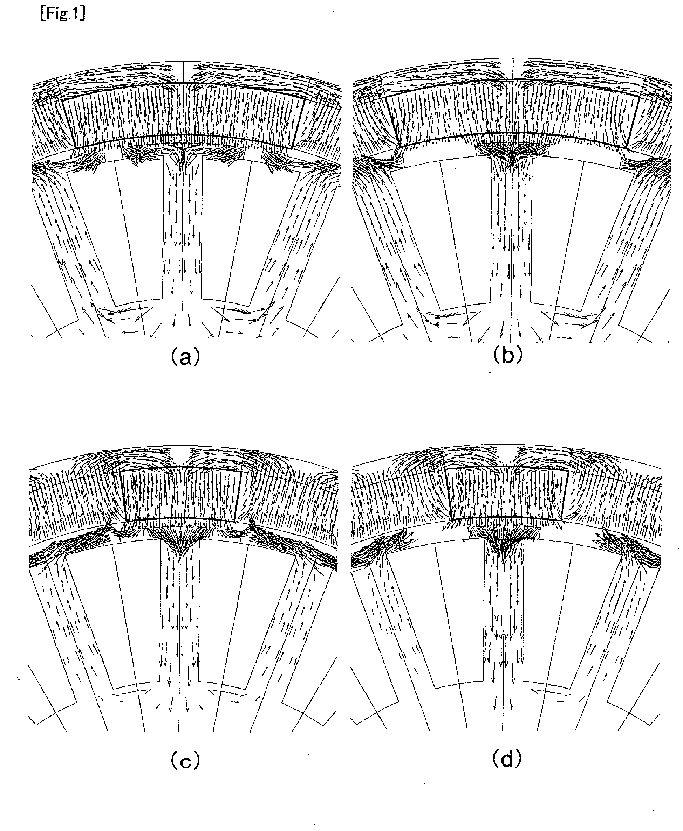

[FIG. 1] (a) is a diagram showing an example of magnetic fluxes produced by a magnet of a synchronous drive motor configured such that the number of magnetic pole faces is 2/3 of the number of teeth and such that a distal end portion of each tooth has a large circumferential width; (b) is a diagram showing an example of magnetic fluxes produced by a magnet of a synchronous drive motor configured such that the number of magnetic pole faces is 2/3 of the number of teeth and such that a distal end portion of each tooth has a small circumferential width; (c) is a diagram showing an example of magnetic fluxes produced by a magnet of a synchronous drive motor configured such that the number of magnetic pole faces is more than the number of teeth and such that a distal end portion of each tooth has a large circumferential width; and (d) is a diagram showing an example of magnetic fluxes produced by a magnet of a synchronous drive motor configured such that the number of magnetic pole faces is more than the number of teeth and such that a distal end portion of each tooth has a small circumferential width.
[FIG. 2] (a) is a graph showing the relationship between an inter-tooth gap and interlinkage magnetic fluxes; and (b) is a graph showing the relationship between the inter-tooth gap and leakage magnetic fluxes occurring between teeth.
[FIG. 3] (a) is a graph showing the relationship between the inter-tooth gap and a torque; and (b) is a graph showing the relationship between the inter-tooth gap and an inductance.
[FIG. 4] A cross-sectional view schematically showing an outline configuration of part of an engine unit including a synchronous drive motor according to an embodiment of the present invention.
[FIG. 5] A cross-sectional view showing, on an enlarged scale, the synchronous drive motor shown in FIG. 4 and the vicinity thereof.
[FIG. 6] A cross-sectional view showing, on an enlarged scale, part of the synchronous drive motor as viewed in the axial direction thereof.
[FIG. 7] A cross-sectional view schematically showing, on an enlarged scale, a rotor and a stator in an example.
[FIG. 8] A diagram schematically showing, on an enlarged scale, how teeth shown in FIG. 7 are arranged when viewed in a radial direction from the rotor.
[FIG. 9] A cross-sectional view schematically showing, on an enlarged scale, a rotor and a stator in another example not covered by the claims and different from the example shown in FIG. 7.
[FIG. 10] (a) is a vector diagram showing electrical characteristics in the synchronous drive motor of this embodiment; (b) is a vector diagram showing conventional electrical characteristics; and (c) is a vector diagram showing electrical characteristics in a comparative example.
[FIG. 11] (a) to (c) are diagrams each schematically showing an example of connection of windings.
[FIG. 12] (a) to (c) are diagrams each schematically showing an example of connection of windings.

### Description of Embodiments

As described above, the present inventors have conducted intensive studies on achievement of both a high output and a high torque while maintaining the size of a synchronous drive motor. Details of the studies will be described with reference to the drawings.

In a conventional synchronous drive motor, it has been a design preference that a circumferential width of a distal end portion of a tooth is increased. It has been also a design preference that the number of magnetic pole faces is 2/3 of the number of teeth. Such preferences have conventionally been common wisdom in designing a synchronous drive motor.

FIG. 1(a) is a diagram showing magnetic fluxes produced by a magnet of such a conventional synchronous drive motor. In the synchronous drive motor shown in FIG. 1(a), the number of magnetic pole faces is 2/3 of the number of teeth, and a distal end portion of the tooth has a relatively large circumferential width.

The conventional synchronous drive motor shown in FIG. 1(a), in which the distal end portion of the tooth has a large circumferential width, is able to collect magnetic fluxes from a wide region of the magnetic pole face with a high efficiency. As a result, a large amount of magnetic fluxes is collected and interlinked with windings. Hereinafter, interlinkage magnetic fluxes that are collected from a magnet and interlinked with a winding will be simply referred to as interlinkage magnetic fluxes.

Conventionally, decreasing the circumferential width of a distal end portion of a tooth has not been preferred because it is contrary to the common wisdom mentioned above.

FIG. 1(b) is a diagram showing magnetic fluxes produced by a magnet of a synchronous drive motor in which a distal end portion of a tooth has a small circumferential width. The synchronous drive motor shown in FIG. 1(b) has the same size as the size of the synchronous drive motor shown in FIG. 1(a). The synchronous drive motor shown in FIG. 1(b) has 2:3 as the ratio of the number of magnet faces to the number of teeth, and the ratio is the same as the ratio of the synchronous drive motor shown in FIG. 1(a). In the synchronous drive motor shown in FIG. 1(b), unlike in the synchronous drive motor shown in FIG. 1(a), the distal end portion of the tooth has a relatively small circumferential width.

In the synchronous drive motor shown in FIG. 1(b), the tooth is able to collect a smaller amount of interlinkage magnetic fluxes from the magnetic pole face. More specifically, the circumferential width of the distal end portion of the tooth is small, and therefore the area over which the distal end portion is opposed to the magnetic pole face is narrow. This results in a decrease in interlinkage magnetic fluxes. That is, a synchronous drive motor whose tooth has a distal end portion with a small circumferential width causes reduced interlinkage magnetic fluxes.

Conventionally, setting the number of magnetic pole faces to be more than 2/3 of the number of teeth has not been preferred, either, because it is contrary to the common wisdom mentioned above.

FIG. 1(c) is a diagram showing an example of magnetic fluxes produced by a magnet of a synchronous drive motor in which the number of magnetic pole faces is 4/3 of the number of teeth. The synchronous drive motor shown in FIG. 1(c) has the same size as the size of the synchronous drive motor shown in FIG. 1(a). The synchronous drive motor shown in FIG. 1(c) includes a tooth whose distal end portion has the same circumferential width as the circumferential width of the distal end portion of the tooth included in the synchronous drive motor shown in FIG. 1(a).

In the synchronous drive motor shown in FIG. 1(c), the distal end portion of the tooth has a relatively large circumferential width. This causes magnetic fluxes inputted from the magnet to the distal end portion of the tooth to partially leak through the distal end portion into an adjacent magnet.

Reducing the circumferential width of the distal end portion of the tooth or setting the number of magnetic pole faces to be more than 2/3 of the number of teeth as shown in FIG. 1(b) or (c) did not give a good result. The results shown in FIG. 1(a) to (c) are according to the two types of common wisdom mentioned above.

The present inventors have attempted to concurrently overturn both the common wisdom that the number of magnetic pole faces is set to be 2/3 of the number of teeth and the common wisdom that the protruding portion of a tooth has an increased size. A result of the attempt is shown in FIG. 1(d).

FIG. 1(d) is a diagram showing an example of magnetic fluxes produced by a magnet of a synchronous drive motor in which the number of magnetic pole faces is 4/3 of the number of teeth and a distal end portion of a tooth has a small circumferential width. The synchronous drive motor shown in FIG. 1(d) has the same size as the size of the synchronous drive motor shown in FIG. 1(a). The synchronous drive motor shown in FIG. 1(d) includes a tooth whose distal end portion has the same circumferential width as the circumferential width of the distal end portion of the tooth included in the synchronous drive motor shown in FIG. 1(b).

The synchronous drive motor shown in FIG. 1(d) includes a magnetic pole face whose circumferential width is smaller than the circumferential widths of the magnetic pole faces included in the synchronous drive motors shown in FIG. 1(a) and (b). Although the circumferential width of the distal end portion of the tooth included in the synchronous drive motor shown in FIG. 1(d) is small, a reduction in the area over which the distal end portion of the tooth is opposed to the magnetic pole face is suppressed because the circumferential width of the magnetic pole face is small, too. Accordingly, the synchronous drive motor shown in FIG. 1(d) achieves suppression of a reduction in interlinkage magnetic fluxes, which may otherwise be involved in the small circumferential width of the distal end portion of the tooth.

Unlike the synchronous drive motor shown in FIG. 1(c), the synchronous drive motor shown in FIG. 1(d) suppresses occurrence of a situation where the magnetic fluxes inputted to the distal end portion of the tooth partially leak through the distal end portion into an adjacent magnet, because the distal end portion of the tooth has a small circumferential width. As a result, the synchronous drive motor shown in FIG. 1(d) achieves suppression of a decrease in the interlinkage magnetic fluxes.

In the synchronous drive motor shown in FIG. 1(d), as described above, a decrease in the interlinkage magnetic fluxes that is involved in a small circumferential width of the distal end portion of the tooth is suppressed, and additionally a decrease in the interlinkage magnetic fluxes is suppressed because of a reduction in the magnetic fluxes that escape to the distal end portion of an adjacent tooth. That is, in the synchronous drive motor shown in FIG. 1(d), suppression of a decrease in the interlinkage magnetic fluxes is achieved even though both of the two types of common wisdom mentioned above are overturned concurrently. The relationship thereof will be described with reference to the drawings.

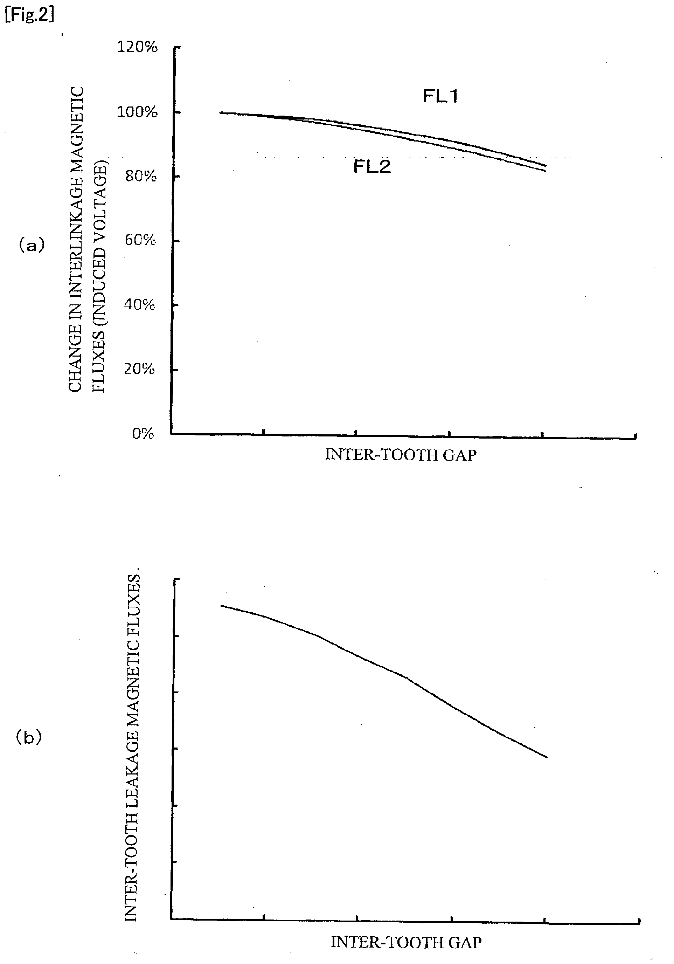

FIG. 2(a) is a graph showing a change in the interlinkage magnetic fluxes relative to an inter-tooth gap.

FIG. 2(a) shows interlinkage magnetic fluxes FL1 and FL2 of two synchronous drive motors having the same size. The interlinkage magnetic fluxes FL1 are interlinkage magnetic fluxes of a synchronous drive motor configured such that the number of magnetic pole faces is more than the number of teeth. More specifically, the interlinkage magnetic fluxes FL1 are interlinkage magnetic fluxes of a synchronous drive motor configured such that the number of magnetic pole faces is 4/3 of the number of teeth. The interlinkage magnetic fluxes FL2 are interlinkage magnetic fluxes of a synchronous drive motor configured such that the number of magnetic pole faces is 2/3 of the number of teeth.

In the graph shown in FIG. 2(a), the horizontal axis represents the inter-tooth gap. As the inter-tooth gap increases, the circumferential width of the distal end portion of the tooth decreases. In the graph shown in FIG. 2(a), the vertical axis represents the interlinkage magnetic fluxes. The interlinkage magnetic fluxes are measured as, for example, an induced voltage that is a time derivative of the interlinkage magnetic fluxes. Hereinafter, the value of the inter-tooth gap corresponding to the left end of the curves showing the interlinkage magnetic fluxes FL1 and FL2 in FIG. 2(a) will be referred to as a minimum gap.

In FIG. 2(a), the interlinkage magnetic fluxes per tooth are shown.

In a synchronous drive motor including a large number of magnetic pole faces, as compared with in a synchronous drive motor including a small number of magnetic pole faces, the magnetic pole face has a smaller area. Accordingly, the synchronous drive motor including a large number of magnetic pole faces causes a smaller amount of interlinkage magnetic fluxes per tooth than the synchronous drive motor including a small number of magnetic pole faces does. Thus, if the vertical axis of the graph shown in FIG. 2(a) represented the absolute value of the amount of change in the interlinkage magnetic fluxes, the interlinkage magnetic fluxes FL1 should be less than the interlinkage magnetic fluxes FL2. In FIG. 2(a), however, the interlinkage magnetic fluxes FL1 and FL2 are shown in a relative manner based on the definition that the amount of interlinkage magnetic fluxes obtained when the inter-tooth gap is the minimum gap corresponds to 100% in both of the two synchronous drive motors. In other words, the interlinkage magnetic fluxes FL1 and FL2 shown in FIG. 2(a) are ones obtained after being converted such that they are comparable with each other. Therefore, the changes in the interlinkage magnetic fluxes FL1 and FL2 shown in FIG. 2(a) are comparable with each other without the need to consider a difference in the number of magnetic pole faces and a difference in the area of the magnetic pole face between the two synchronous drive motors. As for an average torque per rotation of the synchronous drive motor, the average torque is proportional to the number of magnetic pole faces. Thus, the relationship of the interlinkage magnetic fluxes of all the teeth of the two synchronous drive motors can be interpreted as identical to the relationship shown in FIG. 2(a).

As shown in FIG. 2(a), the interlinkage magnetic fluxes FL1 and FL2 decrease as the circumferential width of the distal end portion of the tooth decreases so that the inter-tooth gap increases. This is because the area over which the distal end portion of the tooth is opposed to the magnetic pole face decreases, as shown in FIG. 1(a) to FIG. 1(d). Here, the amount of decrease in the interlinkage magnetic fluxes FL1 of the synchronous drive motor configured such that the number of magnetic pole faces is more than the number of teeth is less than the amount of decrease in the interlinkage magnetic fluxes FL2 of the synchronous drive motor configured such that the number of magnetic pole faces is 2/3 of the number of teeth. This indicates that a decrease in the interlinkage magnetic fluxes is suppressed even though both of the two types of common wisdom mentioned above are overturned concurrently.

FIG. 2(b) is a graph showing a change in inter-tooth leakage magnetic fluxes relative to the inter-tooth gap.

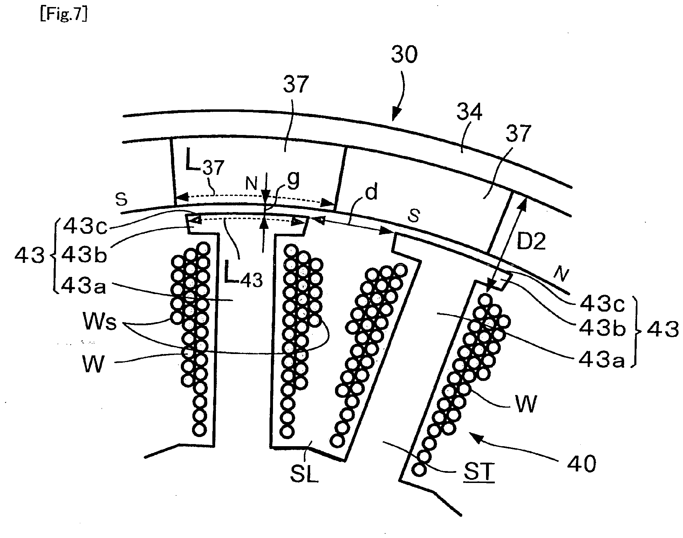

The inter-tooth leakage magnetic fluxes are represented as, for example, magnetic fluxes flowing toward an adjacent tooth 43 through an inter-tooth gap d among magnetic fluxes produced by a winding W of a stator 40 shown in FIG. 7 which will be described later. A larger amount of inter-tooth leakage magnetic fluxes results in a smaller amount of stator magnetic fluxes. The magnetic fluxes having flowed toward the adjacent tooth 43 do not contribute to generation of a torque. The amount of leakage magnetic fluxes depends largely on the shape of the stator. The two synchronous drive motors has the same size and therefore has the same stator shape, though the number of magnetic pole faces is different. Accordingly, in the example shown in FIG. 2(b), the inter-tooth leakage magnetic fluxes of the synchronous drive motor configured such that the number of magnetic pole faces is more than the number of teeth are identical to the inter-tooth leakage magnetic fluxes of the synchronous drive motor configured such that the number of magnetic pole faces is 2/3 of the number of teeth. Thus, the inter-tooth leakage magnetic fluxes shown in FIG. 2(b) indicate the inter-tooth leakage magnetic fluxes of these two synchronous drive motors.

As shown in FIG. 2(b), when the circumferential width of the distal end portion of the tooth is small so that the inter-tooth gap is large, the amount of inter-tooth leakage magnetic fluxes is small. This is because a reluctance of the inter-tooth gap increases as the inter-tooth gap increases. A decrease in the inter-tooth leakage magnetic fluxes results in an increase in the stator magnetic fluxes.

FIG. 1(a) to (d) and FIG. 2(a), (b) indicate the following relationships (A) and (B) regarding the interlinkage magnetic fluxes and the inter-tooth leakage magnetic fluxes of the two synchronous drive motors described above.
(A) In both of the two synchronous drive motors, the interlinkage magnetic fluxes decrease as the inter-tooth gap increases. Here, a decrease in the interlinkage magnetic fluxes FL1 of the synchronous drive motor configured such that the number of magnetic pole faces is more than the number of teeth is suppressed as compared with a decrease in the interlinkage magnetic fluxes FL2 of the synchronous drive motor configured such that the number of magnetic pole faces is 2/3 of the number of teeth.
(B) In both of the two synchronous drive motors, the inter-tooth leakage magnetic fluxes decrease as the inter-tooth gap increases. The two synchronous drive motors have the same or substantially the same degree of decrease in the inter-tooth leakage magnetic fluxes.

The present inventors have found out that, based on the relationships (A) and (B), a change in the torque relative to the inter-tooth gap differs between the two synchronous drive motors described above. Next, a difference in the change in the torque relative to the inter-tooth gap between the two synchronous drive motors described above will be described with reference to the drawings.

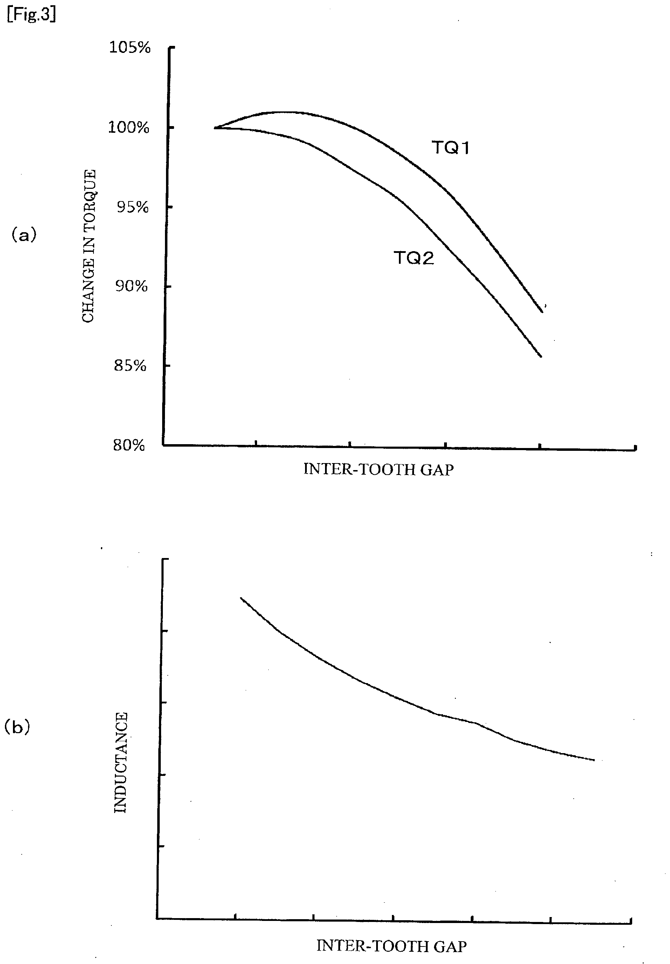

FIG. 3(a) is a graph showing a change in the torque relative to the inter-tooth gap.

FIG. 3(a) shows a torque TQ1 of the synchronous drive motor configured such that the number of magnetic pole faces is more than the number of teeth and a torque TQ2 of the synchronous drive motor configured such that the number of magnetic pole faces is 2/3 of the number of teeth. A synchronous drive motor configured such that the number of magnetic pole faces is 4/3 of the number of teeth is illustrated as an example of the synchronous drive motor configured such that the number of magnetic pole faces is more than the number of teeth.

The torque is proportional to the value of [the number of magnetic pole faces × interlinkage magnetic fluxes × stator magnetic fluxes]. As shown in FIG. 2(a), in the synchronous drive motor configured such that the number of magnetic pole faces is more than the number of teeth, a decrease in the interlinkage magnetic fluxes FL1 is suppressed even when the circumferential width of the distal end portion of the tooth decreases so that the inter-tooth gap increases.

Therefore, as shown in FIG. 3(a), when the inter-tooth gap increases, the torque TQ2 of the synchronous drive motor configured such that the number of magnetic pole faces is 2/3 of the number of teeth rapidly decreases, while the torque TQ1 of the synchronous drive motor configured such that the number of magnetic pole faces is more than the number of teeth increases once. After increasing once, the torque TQ1 decreases. The decrease in the torque TQ1 is suppressed as compared with the torque TQ2 of the synchronous drive motor configured such that the number of magnetic pole faces is 2/3 of the number of teeth. That is, as compared with the synchronous drive motor configured such that the number of magnetic pole faces is 2/3 of the number of teeth, the synchronous drive motor configured such that the number of magnetic pole faces is more than the number of teeth achieves suppression of a decrease in the torque even when the circumferential width of the distal end portion of the tooth is reduced. Additionally, in the synchronous drive motor configured such that the number of magnetic pole faces is more than the number of teeth, reducing the circumferential width of the distal end portion of the tooth to increase the inter-tooth gap causes a region where a torque higher than the torque obtained in a case of the minimum gap. The synchronous drive motor configured such that the number of magnetic pole faces is more than the number of teeth is able to obtain a high torque by, for example, increasing the stator magnetic fluxes with suppression of a decrease in the interlinkage magnetic fluxes.

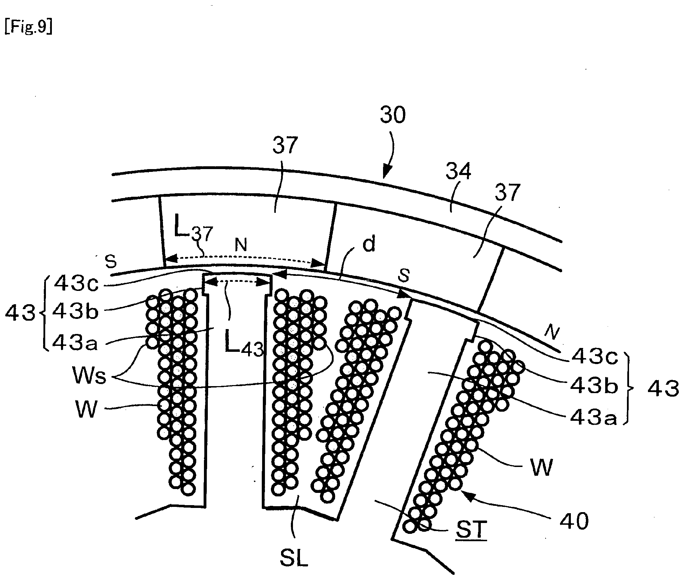

Moreover, in the synchronous drive motor configured such that the number of magnetic pole faces is more than the number of teeth and such that the distal end portion of the tooth has a smaller circumferential width than the circumferential width of the magnetic pole face, the inter-tooth gap is large, which dramatically improves the degree of freedom in the design of the winding. For example, during a manufacturing process, a wire or a part of a manufacturing apparatus runs through the inter-tooth gap. For example, as shown in FIGS. 7 and 9 which will be described later, a large inter-tooth gap provides a high degree of freedom in the selection of a technique for winding the wire on the tooth to form the winding and in the selection of the type of the manufacturing apparatus. For example, as shown in FIG. 9 which will be described later, a slot SL that is large in response to a small distal end portion 43c of the tooth allows an increase in the number of turns of a winding W. Such use of the slot SL that is large in response to the small distal end portion 43c of the tooth can be made in a case shown in FIG. 7, too. For example, the stator 40 shown in FIG. 9 can be manufactured by forming a winding W without winding it on any tooth 43 and then inserting the tooth 43 into the winding W. This can narrow the interval between windings W adjacent to each other. As a result, the number of turns of the winding can be increased. As the distal end portion of the tooth has a smaller circumferential width so that the inter-tooth gap is larger, the degree of freedom in the design of the winding is improved. Accordingly, the synchronous drive motor configured such that the number of magnetic pole faces is more than the number of teeth and such that the distal end portion of the tooth has a smaller circumferential width than the circumferential width of the magnetic pole face is able to enhance a torque by increasing the number of turns of the winding.

Therefore, the synchronous drive motor configured such that the number of magnetic pole faces is more than the number of teeth and such that the distal end portion of the tooth has a smaller circumferential width than the circumferential width of the magnetic pole face is able to enhance a torque by, for example, increasing the stator magnetic fluxes with suppression of a decrease in the interlinkage magnetic fluxes or by increasing the number of turns of the winding. In this way, the present inventors have discovered that concurrently overturning the two types of common wisdom mentioned above leads to enhancement of a torque of the synchronous drive motor.

Next, the impedance of the winding will be described.

FIG. 3(b) is a graph showing a change in the inductance relative to the inter-tooth gap.

As shown in FIG. 3(b), when the circumferential width of the distal end portion of the tooth is small so that the inter-tooth gap is large, the inductance is low. This is because: the inter-tooth gap is included in a magnetic flux path through which magnetic fluxes produced by the winding pass, and a large inter-tooth gap leads to a high reluctance of the inter-tooth gap, which increases a reluctance of the entire magnetic flux path.

A current supplied to the winding of the synchronous drive motor depends on the impedance of the winding. An AC component of the impedance is the product ωL of the angular velocity ω and the inductance L. The synchronous drive motor configured such that the number of magnetic pole faces is more than the number of teeth has a higher angular velocity ω than that of the synchronous drive motor configured such that the number of magnetic pole faces is 2/3 of the number of teeth. As shown in FIG. 3(b), when the circumferential width of the distal end portion of the tooth is smaller than the circumferential width of the magnetic pole face so that the inter-tooth gap is large, the inductance L is low. Therefore, even when the number of magnetic pole faces is more than the number of teeth so that the angular velocity ω is high, the AC component ωL of the impedance can be maintained. To be specific, an increase in the AC component ωL of the impedance, which is caused by an increase in the angular velocity ω, can be suppressed. As a result, a current supplied to the synchronous drive motor can be ensured.

Furthermore, in the synchronous drive motor configured such that the number of magnetic pole faces is more than the number of teeth and such that the distal end portion of the tooth has a smaller circumferential width than the circumferential width of the magnetic pole face, the inter-tooth gap is large, which dramatically improves the degree of freedom in the design of the winding. Here, for example, in a case where a wire or a part of a winding apparatus runs through the inter-tooth gap during the manufacturing process, a wire having a large diameter can be used. Additionally, for example, as shown in FIG. 9 which will be described later, the slot that is large in response to the small distal end portion 43c of the tooth allows use of a wire having a large diameter. Moreover, for example, the stator 40 shown in FIG. 9 can be manufactured by forming a winding W without winding it on any tooth 43 and then inserting the tooth 43 into the winding W. This can narrow the interval between windings W adjacent to each other, and therefore allows use of a wire having a large diameter. As a result, a resistance R of the winding can be lowered. Thus, by increasing the current supplied to the winding, both a torque and an output are improved.

As thus far described, the synchronous drive motor configured such that the number of magnetic pole faces is more than the number of teeth and such that the distal end portion of the tooth has a smaller circumferential width than the circumferential width of the magnetic pole face is able to improve an output and a torque, as compared with a conventional synchronous drive motor having the same size. Which of the torque and the output is to be more highly improved is adjustable by, for example, which of the diameter of the winding and the number of turns of the winding is more highly increased.

In this manner, the present inventors, which have discovered that concurrently overturning the two types of common wisdom mentioned above enables the synchronous drive motor to satisfy a high torque, a high output, and downsizing at a high level, have accomplished the present invention as defined in claim 1.

Hereunder, the present invention will be described based on a preferred embodiment with reference to the drawings. In this embodiment, a synchronous drive motor that starts an engine will be described as an example of the synchronous drive motor according to the present invention.

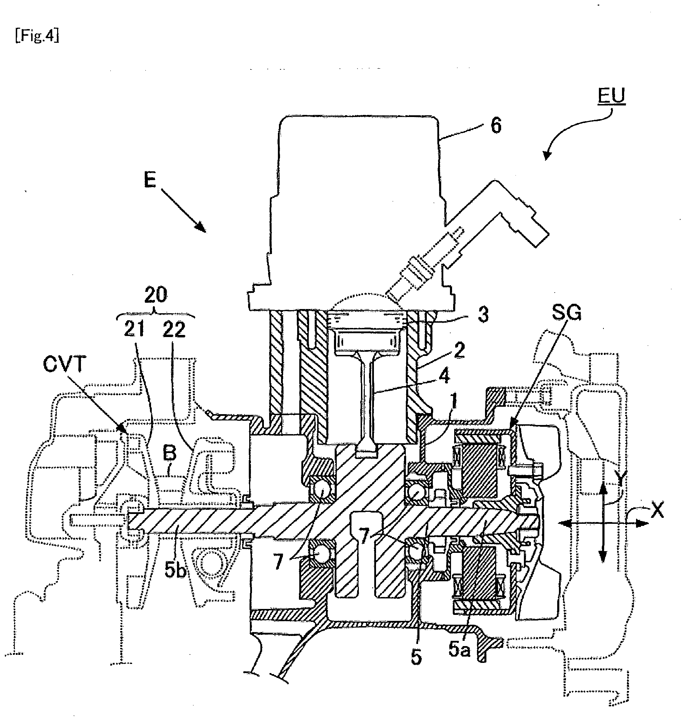

FIG. 4 is a cross-sectional view schematically showing an outline configuration of part of an engine unit EU including a synchronous drive motor SG according to an embodiment of the present invention.

The engine unit EU is mounted in, for example, a vehicle. The engine unit EU includes an engine body E and the synchronous drive motor SG. The synchronous drive motor SG is a starter motor that drives the engine body E.

The engine unit EU includes the synchronous drive motor SG. The synchronous drive motor SG is a three-phase brushless motor. At a time of engine start, the synchronous drive motor SG rotates a crankshaft 5 to start the engine body E. Also, the synchronous drive motor SG is rotated by the crankshaft 5, to function as a generator. In a case where the synchronous drive motor SG functions as a generator, it is not indispensable that the synchronous drive motor SG functions as a generator all the time after combustion of the engine is started. In an acceptable example, the synchronous drive motor SG does not immediately function as a generator after combustion of the engine is started, and the synchronous drive motor SG functions as a generator when a predetermined condition is satisfied. Examples of the predetermined condition include a condition that the rotation speed of the engine reaches a predetermined speed and a condition that a predetermined time period elapses after combustion of the engine is started. It may be acceptable that a time period in which the synchronous drive motor SG functions as a generator and a time period in which the synchronous drive motor SG functions as a motor (such as a vehicle-driving motor) are present after combustion of the engine is started.

The engine body E includes a crank case 1, a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable to and fro. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The synchronous drive motor SG is attached to the one end portion 5a of the crankshaft 5.

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to the distal end of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel (not shown) of the motorcycle.

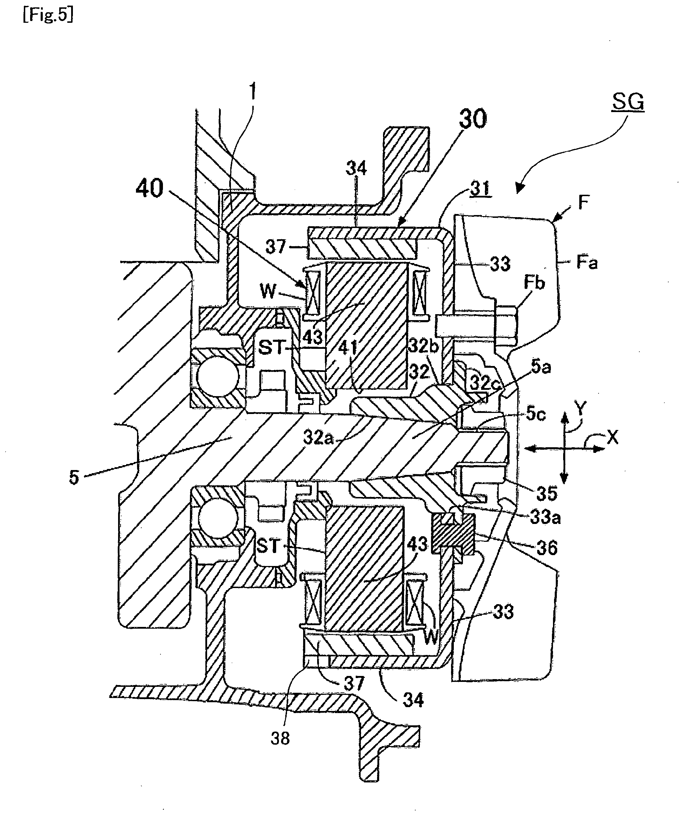

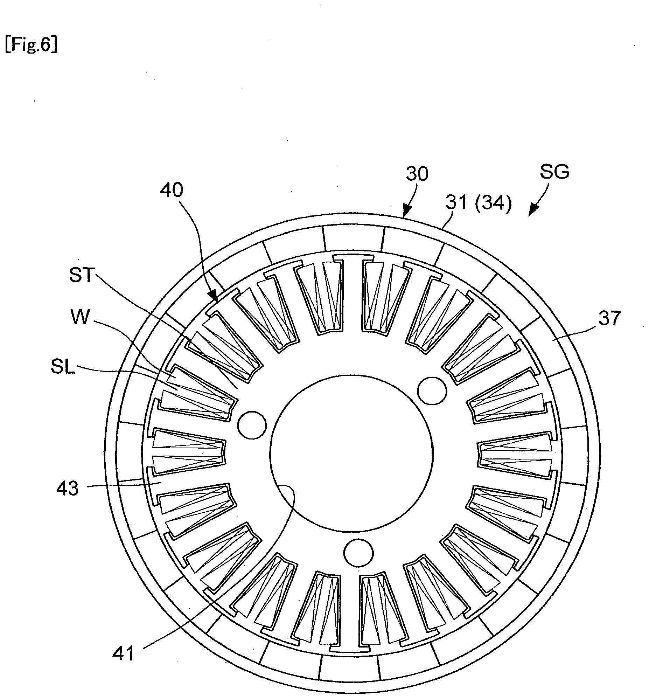

FIG. 5 is a cross-sectional view showing, on an enlarged scale, the synchronous drive motor SG shown in FIG. 4 and the vicinity thereof. FIG. 6 is a cross-sectional view showing, on an enlarged scale, part of the synchronous drive motor SG shown in FIG. 4, as viewed in the axial direction X thereof.

The synchronous drive motor SG includes a rotor 30, a stator 40, and a magnetic sensor unit (not shown). The rotor 30 includes a rotor main body part 31 and a plurality of permanent magnet parts 37 that are provided to the rotor main body part 31. The rotor main body part 31 is made of, for example, a ferromagnetic material. The rotor main body part 31 is in the shape of a cylinder with a bottom. The rotor main body part 31 includes a tubular boss portion 32, a bottom wall part 33 having a disk-like shape, and a back yoke part 34 having a cylindrical shape. The tubular boss portion 32 is fixed to the crankshaft 5 under a state where the one end portion 5a of the crankshaft 5 is received in the tubular boss portion 32 The bottom wall part 33, which is fixed to the tubular boss portion 32, has a disk-like shape that extends in a radial direction Y of the crankshaft 5. The back yoke part 34 has a cylindrical shape that extends in the axial direction X of the crankshaft 5 from an outer circumferential edge of the bottom wall part 33. The back yoke part 34 extends toward the crank case 1. In the synchronous drive motor SG of this embodiment, the rotor 30 is an outer rotor, and the stator 40 is an inner stator.

The bottom wall part 33 and the back yoke part 34 are integrally formed through, for example, a stamping process performed on a metal plate. In the present invention, the bottom wall part 33 and the back yoke part 34 may be formed as separate members. More specifically, in the rotor main body part 31, the back yoke part 34 may be integrally formed with another part of the rotor main body part 31, or may be formed as a member separate from another part of the rotor main body part 31. In a case where the back yoke part 34 and another part are formed as separate members, it suffices that the back yoke part 34 is made of a ferromagnetic material, and another part may be made of a material different from the ferromagnetic material.

The tubular boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft 5 is fixed to the reception hole 32a. As a result, the position of the boss portion 32 is settled with respect to the axial direction X of the crankshaft 5. In this condition, a nut 35 is screwed onto a male thread 5c formed at the distal end of the one end portion 5a of the crankshaft 5. Thus, the tubular boss portion 32 is fixed to the crankshaft 5.

The tubular boss portion 32 has a large-diameter portion 32b that is provided in a proximal end portion (at the right side in FIG. 5) of the tubular boss portion 32. The tubular boss portion 32 has a flange portion 32c that is formed on an outer circumferential surface of the large-diameter portion 32b. The flange portion 32c extends radially outward. The large-diameter portion 32b of the tubular boss portion 32 is received in a hole 33a that is formed in a central portion of the bottom wall part 33 of the rotor main body part 31. In this condition, the flange portion 32c is in contact with an outer circumferential surface (a right-hand surface in FIG. 5) of the bottom wall part 33. The flange portion 32c of the tubular boss portion 32 and the bottom wall part 33 of the rotor main body part 31 are integrally fixed by rivets 36 at a plurality of locations with respect to a circumferential direction of the rotor main body part 31. The rivets 36 penetrate through the flange portion 32c and the bottom wall part 33.

The plurality of permanent magnet parts 37 are provided on an inner circumferential surface of the back yoke part 34 of the rotor main body part 31. The permanent magnet parts 37 are arranged radially outside the stator 40. Each of the permanent magnet parts 37 is provided such that the S pole and the N pole are arranged side by side with respect to a radial direction of the synchronous drive motor SG. The rotor 30 has, in its surface opposed to the stator 40, magnetic pole faces that are formed by the plurality of permanent magnet parts 37.

The plurality of permanent magnet parts 37 are arranged in such a manner that the N pole and the S pole alternately appear with respect to a circumferential direction of the synchronous drive motor SG. In this embodiment, the number of magnetic pole faces of the rotor 30 opposed to the stator 40 is twenty-four. The number of magnetic pole faces of the rotor 30 means the number of magnetic pole faces opposed to the stator 40. The number of magnetic pole faces of the permanent magnet parts 37 that are opposed to teeth 43 of a stator core ST is equivalent to the number of magnetic poles of the rotor 30. A magnetic pole face included in each magnetic pole of the rotor 30 corresponds to a magnetic pole face of the permanent magnet part 37 that is opposed to the stator 40. The magnetic pole face of the permanent magnet part 37 is covered with a non-magnetic material (not shown) that is arranged between the permanent magnet part 37 and the stator 40. No magnetic material is arranged between the permanent magnet part 37 and the stator 40. No particular limitation is put on the non-magnetic material, and examples thereof include a stainless steel material. In this embodiment, the permanent magnet part 37 is a ferrite magnet. The shape of the permanent magnet part 37 is not particularly limited. Although the rotor 30 may be of interior permanent magnet type (IPM type) configured such that the permanent magnet parts 37 are embedded in a magnetic material, it is preferable that the rotor 30 is of surface permanent magnet type (SPM type) configured such that the permanent magnet parts 37 are exposed from a magnetic material, as illustrated in this embodiment (see FIGS. 5 and 7). The rotor 30 may be of inset type, too. The rotor 30 of inset type is configured such that the magnetic pole faces of the permanent magnet parts 37 (the surfaces of the permanent magnet parts 37 opposed to the stator 40) are at least partially exposed from the magnetic material, and a magnetic material is arranged between the permanent magnet parts 37 that are adjacent to each other with respect to the circumferential direction.

The stator 40 includes a stator core ST and windings W. The stator core ST is obtained by, for example, thin silicon steel plates being stacked in the axial direction. The stator core ST has, in its central portion, a hole 41 whose inner diameter is larger than the outer diameter of the tubular boss portion 32 of the rotor 30. The stator core ST includes a plurality of teeth 43 that integrally extend radially outward (see FIG. 6). The plurality of teeth 43 are spaced from one another by slots SL with respect to the circumferential direction. In this embodiment, eighteen teeth 43 in total are arranged at intervals with respect to the circumferential direction. The stator core ST includes eighteen teeth 43 in total. That is, the stator core ST of the synchronous drive motor SG includes six or more teeth 43. The teeth 43 are arranged with a constant pitch angle. Therefore, each tooth 43 is arranged at a pitch angle of 60° or less. The number of teeth 43 is equal to the number of slots SL.

The winding W is wound on each tooth 43. The winding W is in the slot SL. All of the plurality of teeth 43 included in the stator core ST have portions on which windings are wound. The winding W belongs to any of U-phase, V-phase, and W-phase. The windings W are arranged in the order of U-phase, V-phase, and W-phase, for example. Since all of the plurality of teeth 43 have portions on which windings are wound, all of the teeth 43 are able to produce magnetic fluxes that contribute to a torque due to the current of the winding W. Therefore, a high torque is exerted.

In the stator core ST of the synchronous drive motor SG including six or more teeth 43, the amount (volume) of the windings W of the entire synchronous drive motor SG can be ensured sufficiently, with suppression of the number of turns of the winding of each tooth, which leads to suppression of an increase in the perimeter per turn of a wire constituting the winding. Accordingly, an increase in the amount (volume) of the winding W of each tooth can be suppressed while the amount (volume) of the windings W of the entire synchronous drive motor SG is ensured sufficiently. Thus, for example, increasing the number of turns of the winding or adopting a wire having a large diameter is allowed, with suppression of an increase in the size of the synchronous drive motor SG.

As shown in FIGS. 5 and 6, the stator 40 has the hole 41 formed in a central portion of the stator 40 with respect to the radial direction of the synchronous drive motor SG. The crankshaft 5 and the tubular boss portion 32 of the rotor 30 are arranged in the hole 41 with a gap ensured between them and a wall surface (of the stator 40) defining the hole 41. The stator 40 under this condition is attached to the crank case 1 of the engine body E. The teeth 43 of the stator 40 are arranged such that the distal end portions 43c (distal end surfaces) of the teeth 43 are at an interval g from the magnetic pole faces (inner circumferential surfaces) of the permanent magnet parts 37 of the rotor 30 (see FIG. 7). In this state, the rotor 30 and the crankshaft 5 of the engine body E rotate integrally.

In the synchronous drive motor SG according to this embodiment, as described above, the number P of magnetic pole faces of the rotor 30 is twenty-four while the number of teeth 43 is eighteen. The ratio of the number P of magnetic pole faces of the rotor 30 to the number of teeth 43 is 4:3. That is, the number of magnetic pole faces included in the rotor 30 is more than the number of teeth 43. The ratio of the number of magnetic pole faces of the rotor 30 to the number of teeth 43 is not limited to this example. Non-limiting example of the upper limit of the ratio of the number P of magnetic pole faces of the rotor 30 to the number of teeth 43 is 4/3. It is preferable that the number of magnetic poles included in the rotor 30 is equal to 4/3 of the number of teeth 43. Since the number of magnetic poles is a multiple of 2, alternately arranging the N pole and the S pole is easy. Since the number of teeth is a multiple of 3, a control based on a three-phase current is easy. Additionally, deviation is not likely to occur during rotation.

In a case where the number of magnetic poles included in the rotor 30 is 4/3 of the number of teeth 43, it is not necessary that the ratio of the number P of magnetic pole faces of the rotor 30 to the number of teeth 43 is exactly 4:3. For example, in some cases, the slots SL of the stator 40 may be partially not formed, in order to allow a control board to be mounted to the stator 40. In such a case, the distance between some slots SL is different from the distance between other slots SL. That is, no slot SL is provided at a position though the slot SL is normally supposed to be provided at the position. In this case, it may be possible that the number of teeth 43 is determined on the assumption that the slot SL is provided at the position where the slot SL is normally supposed to be formed. The same applies to the number of magnetic poles of the rotor 30. To be specific, when magnetic poles and slots are arranged so as to form a (4:3)-structure that satisfies the relationship that the ratio of the number of magnetic poles to the number of teeth is 4:3, it can be considered that the number of magnetic pole faces included in the rotor 30 is substantially 4/3 of the number of teeth 43. In other words, it can be considered that the synchronous drive motor SG has, as its basic configuration, the configuration of a rotating electric machine having the (4:3)-structure. The same applies to a case where the synchronous drive motor SG has a ratio other than 4:3.

The synchronous drive motor SG is connected to a controller (not shown). The synchronous drive motor SG and the controller constitute a drive unit (not shown) for driving the engine body E that is an object to be driven. In other words, the drive unit includes the synchronous drive motor SG and the controller. The controller corresponds to the control device of the present invention. The controller may have a function as a driver. The controller may be connected to the synchronous drive motor SG via a driver.

The controller controls the current supplied to the windings W of the stator 40. More specifically, at a time of starting the engine body E, the controller changes (e.g., increases or decreases) the current supplied to the winding of each of U-phase, V-phase, and W-phase. How to change the current is not particularly limited. In a possible example, sine-wave currents whose phases are shifted from one another may be supplied to the windings of respective phases, so that the current supplied to the winding of each phase is changed. In another possible example, square-wave currents whose phases are shifted from one another may be supplied to the windings of respective phases, so that the current supplied to the winding of each phase is changed (so-called 120° conduction). In this manner, the rotor 30 is rotated.

The controller supplies a current to the winding W in such a manner that, at a time when the rotor 30 rotates the crankshaft 5, the phase of the current supplied to the winding W of the stator 40 is angularly in advance of the phase of an induced voltage caused in the winding W by the permanent magnet part 37 of the rotor 30. Supplying a drive current including a d-axis current component to the winding W is the way in which the controller supplies a current to the winding W so as to angularly advance the phase of the current supplied to the winding W.

After the engine body E is started, the to-and-fro movement of the piston 3 of the engine body E is transmitted to the crankshaft 5 via the connecting rod 4, so that the crankshaft 5 is rotated. When the crankshaft 5 rotates, the rotor 30 fixed to the crankshaft 5 rotates. This causes the permanent magnet parts 37 of the rotor 30 to rotate along the outer circumference of the stator 40. As a result, due to magnetic fluxes of the permanent magnet parts 37, an induced electromotive force occurs in each winding that forms the winding W wound on the tooth 43 of the stator 40. Accordingly, at least after the engine body E is started, the synchronous drive motor SG functions as a generator.

The synchronous drive motor SG includes a magnetic sensor unit. The magnetic sensor unit detects the rotation position of the rotor 30. The controller controls the synchronous drive motor SG based on the rotation position of the rotor 30 that is detected by the magnetic sensor unit. The controller starts the combustion of the engine body E at a timing that is determined based on the rotation position of the rotor 30.

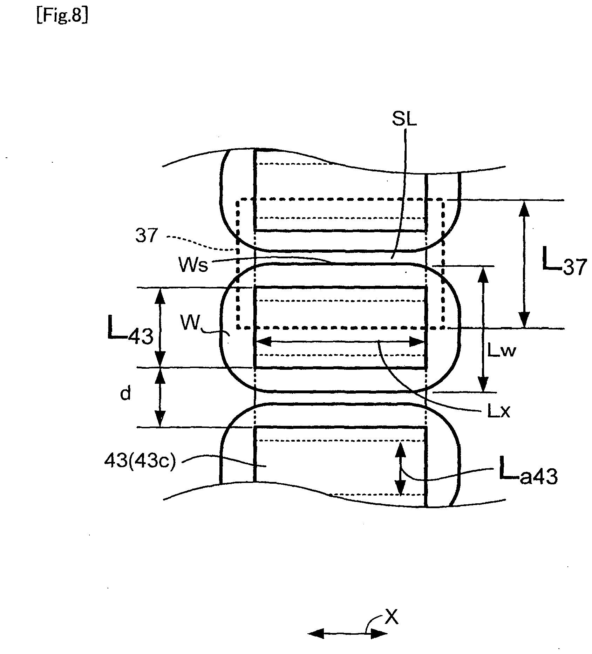

FIG. 7 is a cross-sectional view schematically showing, on an enlarged scale, the rotor 30 and the stator 40 in an example. FIG. 8 is a diagram schematically showing, on an enlarged scale, how the teeth 43 shown in FIG. 7 are arranged when viewed in the radial direction from the rotor 30. In other words, FIG. 8 schematically shows the distal end portions 43c of the teeth 43 as viewed in the direction extending from the distal end portions 43c of the teeth 43 toward proximal portions (located opposite to the distal end portions 43c) of the teeth 43. In a case of the synchronous drive motor SG of radial gap type as illustrated in this embodiment, the direction extending from the distal end portions 43c of the teeth 43 toward the proximal portions of the teeth 43 corresponds to, for example, the radial direction of the synchronous drive motor SG. In a case of the synchronous drive motor SG of axial gap type, the direction extending from the distal end portions 43c of the teeth 43 toward the proximal portions of the teeth 43 corresponds to, for example, the axial direction of the synchronous drive motor SG.

The rotor 30 includes the back yoke part 34 and the plurality of permanent magnet parts 37 that are provided to the inner circumferential surface of the back yoke part 34 and arranged side by side in the circumferential direction. The stator 40 includes the stator core ST and the windings W. The stator core ST includes the plurality of teeth 43 that are arranged at intervals with respect to the circumferential direction. Each tooth 43 includes a main portion 43a, a distal end portion 43c, and a pair of lateral protruding portions 43b. The distal end portion 43c is opposed to the rotor 30. The lateral protruding portions 43b protrude from the main portion 43a toward opposite sides of the main portion 43a with respect to the circumferential direction. The lateral protruding portions 43b are included in the distal end portion 43c. The slot SL is formed between ones of the teeth 43. The winding W is wound on the main portion 43a of each tooth 43. The main portion 43a shown in FIG. 7 corresponds to the portion wound with the winding of the present invention. The distal end portion 43c of the tooth 43 is opposed to the magnetic pole face arranged outside the stator core ST. Therefore, the interval between the distal end portions of teeth 43 adjacent to each other is relatively wider than the interval between the proximal portions of the adjacent teeth 43.

The interval g shown in FIG. 7 is the interval between the rotor 30 and the stator 40 with respect to the radial direction of the synchronous drive motor SG. The interval g is equivalent to the interval between the magnetic pole faces of the permanent magnet parts 37 and the distal end portions of the teeth 43 with respect to the radial direction of the synchronous drive motor SG. The inner circumferential surface of the permanent magnet part 37 has an arc-like shape with the convexity directed radially outward of the synchronous drive motor SG when seen along the rotation axis of the synchronous drive motor SG. The outer circumferential surface of the stator core ST has an arc-like shape with the convexity directed radially outward of the synchronous drive motor SG when seen along the rotation axis of the synchronous drive motor SG. The inner circumferential surface (magnetic pole face) of the permanent magnet part 37 is opposed to the outer circumferential surface of the stator core ST with the interval g therebetween. The inner circumferential surface of the permanent magnet part 37 is covered with the non-magnetic material (not shown) as described above, but instead may be exposed to the interval g. The inner circumferential surface of the permanent magnet part 37 is not covered with a magnetic material. That is, the magnetic pole face of the permanent magnet part 37 and the distal end portion of the tooth 43 are opposed to each other with no magnetic material interposed therebetween. The value of the interval g is not particularly limited, and may be about 1 mm, for example. The inter-tooth gap d indicates the interval between the distal end portions 43c of the teeth 43 that are adjacent to each other with respect to the circumferential direction of the synchronous drive motor SG. The inter-tooth gap d corresponds to the gap between the distal end portions with respect to the circumferential direction of the present invention. The reference sign D2 denotes the distance between the winding W and the back yoke part 34 with respect to the radial direction of the synchronous drive motor SG. The reference sign L₃₇ denotes the width of the magnetic pole face of the permanent magnet part 37 with respect to the circumferential direction of the synchronous drive motor SG. The reference sign L₄₃ denotes the width of the distal end portion 43c of the teeth 43 with respect to the circumferential direction of the synchronous drive motor SG. In the present specification, the width of the magnetic pole face means the value obtained by dividing the circumferential length of a surface of the rotor 30 opposed to the stator 40 by the number of magnetic pole faces. In a synchronous drive motor of this embodiment, the circumferential width of a magnet surface of a permanent magnet included in a permanent magnet part corresponds to the width of the magnetic pole face

Referring to FIG. 8, the width Lw across an outer edge Ws of the winding W with respect to the circumferential direction (the maximum width of the winding W with respect to the circumferential direction) is larger than the circumferential width L₄₃ of the distal end portion 43c. Here, the outer edge Ws of the winding W with respect to the circumferential direction means a part of the outer edge of the winding W located outermost with respect to the circumferential direction of the synchronous drive motor SG. The outer edge Ws of the winding W with respect to the circumferential direction, for example, extends in the axial direction of the synchronous drive motor SG as shown in FIG. 8. The outer edge Ws of the winding W wound on the tooth 43 with respect to the circumferential direction is located outer than the outer edge of the distal end portion 43c of the tooth 43. As shown in FIG. 8, the outermost periphery of the winding W is located outer than the outer periphery of the distal end portion 43c, when the distal end portion 43c is viewed in the direction perpendicular to the rotation axis of the synchronous drive motor SG, and in other words, when the distal end portion 43c is seen in the direction from infinity toward the center of the synchronous drive motor SG. As shown in FIG. 8, the thickness Lx of the distal end portion 43c of the tooth 43 with respect to the axial direction X is larger than the circumferential width L₄₃ of the distal end portion 43c. The axial thickness Lx of the main portion 43a of the tooth 43 is larger than the circumferential width La₄₃ of the main portion 43a. In this embodiment, the width Lw across the outer edge Ws of the winding W with respect to the circumferential direction is larger than the width L₃₇ of the magnetic pole face. Thus, in this embodiment, the width L₃₇ of the magnetic pole face is larger than the circumferential width L₄₃ of the distal end portion 43c and smaller than the width Lw across the outer edge Ws of the winding W with respect to the circumferential direction.

In FIG. 8, the dimension of the magnetic pole face of the permanent magnet part 37 is also shown. While the rotor 30 is rotating relative to the teeth 43, the area of a region of the distal end portion 43c of the tooth 43 opposed to every magnetic pole face does not exceed the area of the distal end portion 43c of one tooth 43. For example, in the state illustrated in FIG. 8, one magnetic pole face whose position is indicated by the broken line is opposed to two teeth 43 at one time. In the two teeth 43, regions opposed to the magnetic pole face have a total area not exceeding the area of the distal end portion 43c of one tooth 43. The condition that the sum of the areas of the regions opposed to the magnetic pole face does not exceed the area of the distal end portion 43c of one tooth 43 applies to all the magnetic pole faces.

The rotor 30 rotates on the rotation axis of the synchronous drive motor SG at a location outside the stator 40 with respect to the radial direction of the synchronous drive motor SG, under a state where the magnetic pole faces, the number of which is more than the number of teeth 43, are opposed to the outer circumferential surface of the stator core ST. The rotation of the rotor 30 causes the magnetic pole faces, the number of which is more than the number of teeth 43, to run over the outer circumferential surface of the stator core ST.

The outer circumferential surface of the permanent magnet part 37 has an arc-like shape with the convexity directed radially outward of the synchronous drive motor SG when seen along the rotation axis of the synchronous drive motor SG. The inner circumferential surface of the back yoke part 34 has an arc-like shape with the convexity directed radially outward of the synchronous drive motor SG when seen along the rotation axis of the synchronous drive motor SG. The outer circumferential surface of the permanent magnet part 37 is in contact with the inner circumferential surface of the back yoke part 34. More specifically, the outer circumferential surface of the permanent magnet part 37 is, at least in a central portion thereof with respect to the circumferential direction, in contact with the inner circumferential surface of the back yoke part 34.

FIG. 9 (not part of the invention) is a cross-sectional view schematically showing, on an enlarged scale, the rotor 30 and the stator 40 of the synchronous drive motor SG in another example different from the example shown in FIG. 7.

The rotor 30 and the stator 40 shown in FIG. 9 are different from those adopted in the example shown in FIG. 7, in terms of the dimension of a part of the stator 40 and the size of the winding W. For example, in the stator 40, the inter-tooth gap d between the distal end portions 43c of the adjacent teeth 43 is larger than the circumferential width L₄₃ of the distal end portion 43c. Additionally, the winding W is arranged at a position overlapping the lateral protruding portion 43b with respect to the radial direction. Moreover, the interval between windings W wound on the adjacent teeth 43 is narrower than that adopted in the example shown in FIG. 7. The tooth 43 shown in FIG. 9 corresponds to the portion wound with the winding.

The other parts of the configuration shown in FIG. 9 are identical to those shown in FIG. 7. In FIG. 9, therefore, parts equivalent to the parts shown in FIG. 7 are given the same reference signs as given in FIG. 7. Hereinafter, the parts shared by the example shown in FIG. 7 and the example shown in FIG. 9 will be described with reference to FIG. 7, unless particularly specified as the example shown in FIG. 9.

In the synchronous drive motor SG shown in FIG. 7, the interval between the distal end portions 43c of the teeth 43 that are adjacent to each other with respect to the circumferential direction of the synchronous drive motor SG is the inter-tooth gap d. The circumferential width L₄₃ of the distal end portion 43c of the tooth 43 is less than the circumferential width L₃₇ of the magnetic pole face of the permanent magnet part 37. That is, the inter-tooth gap d is set such that the circumferential width L₄₃ of the distal end portion 43c of the tooth 43 is less than the circumferential width L₃₇ of the magnetic pole face of the permanent magnet part 37.

In the synchronous drive motor SG of this embodiment, the number of magnetic pole faces is more than the number of teeth 43, and the circumferential width L₄₃ of the distal end portion 43c of the tooth 43 is smaller than the circumferential width L₃₇ of the magnetic pole face of the permanent magnet part 37. This enables the synchronous drive motor SG to satisfy a high torque, a high output, and downsizing at a high level. The synchronous drive motor SG configured such that the number of magnetic pole faces is more than the number of teeth 43 and such that the circumferential width L₄₃ of the distal end portion 43c of the tooth 43 is smaller than the circumferential width of the magnetic pole face achieves downsizing, as compared with the conventional synchronous drive motor configured to provide the same output and the same torque as those of this synchronous drive motor SG. Accordingly, a high torque, a high output, and downsizing can be satisfied at a high level.

Here, stator magnetic fluxes directed from the tooth toward the magnetic pole face will be further described with reference to FIG. 7. As the inter-tooth gap d increases, the leakage magnetic fluxes of the tooth 43 decreases. However, once the inter-tooth gap d exceeds the distance D2, a decrement of the leakage magnetic fluxes of the tooth 43 relative to an increment of the inter-tooth gap d is reduced. Accordingly, an increment of the stator magnetic fluxes relative to an increment of the inter-tooth gap d is also reduced.

Considering the above, it is preferable that the inter-tooth gap d is equal to or less than the distance D2. In such a case, it is preferable that the number of magnetic poles included in the rotor 30 is equal to or more than 4/3 of the number of teeth 43. It is particularly preferable that the number of magnetic poles included in the rotor 30 is 4/3 of the number of teeth 43. It is preferable that the circumferential width L₄₃ of the distal end portion 43c of the teeth 43 is larger than 1/3 of the circumferential width L₃₇ of the magnetic pole face.

It is preferable that the inter-tooth gap d is equal to or less than the circumferential width L₃₇ of the magnetic pole face of the permanent magnet part 37. It is preferable that the inter-tooth gap d is less than the circumferential width L₃₇ of the magnetic pole face of the permanent magnet part 37. It is preferable that the inter-tooth gap d is equal to or less than ten times the interval g. It is preferable that the inter-tooth gap d is equal to or more than three times the interval g. It is more preferable that the inter-tooth gap d is equal to or more than four times the interval g. It is further preferable that the inter-tooth gap d is equal to or more than five times the interval g. It is particularly preferable that the inter-tooth gap d is equal to or more than seven times the interval g. To be specific, the inter-tooth gap d is preferably equal to or less than 10 mm. The inter-tooth gap d is preferably equal to or more than 3 mm, more preferably equal to or more than 4 mm, further preferably equal to or more than 5 mm, and particularly preferably equal to or more than 7 mm.

In the synchronous drive motor SG of this embodiment, the width Lw across the outer edge Ws of the winding W with respect to the circumferential direction is larger than the circumferential width L₄₃ of the distal end portion 43c. Since the amount of the winding W wound on the tooth 43 is large, a higher torque and a higher output can be obtained. Preferably, as shown in FIG. 8, the outermost periphery of the winding W is located outer than the outer periphery of the distal end portion 43c, when the distal end portion 43c of the tooth 43 is viewed in the direction perpendicular to the rotation axis of the synchronous drive motor SG, and in other words, when the distal end portion 43c of the tooth 43 is viewed from the magnetic pole face in the direction of opposing of the permanent magnet part 37 to the tooth 43.

In the example shown in FIG. 9, when the distal end portion 43c is viewed along the rotation axis of the synchronous drive motor SG, the outer edge Ws of the winding W wound on the tooth 43 with respect to the circumferential direction is located outer than the outer edge of the distal end portion 43c of the tooth 43 with respect to the circumferential direction. In such a case, the amount of the winding W is further large. Therefore, a further higher torque and a further higher output can be obtained.

In the synchronous drive motor SG, the interval between the distal end portions of the adjacent teeth 43 is relatively wider than the interval between the proximal portions (located opposite to the distal end portions) of the adjacent teeth 43. This configuration further increases the degree of freedom in the arrangement of the winding W. Accordingly, a high torque and a high output can be obtained by increasing the amount of the winding W.

In the example shown in FIG. 7, while the rotor 30 is rotating relative to the teeth 43, the area of a region of the distal end portion 43c of the tooth 43 opposed to every magnetic pole face does not exceed the area of the distal end portion 43c of one tooth 43. This configuration suppresses occurrence of a situation where the magnetic fluxes produced by the magnetic pole face are distributed over a region wider than the area of the distal end portion 43c of one tooth 43. As a result, a decrease in the torque can be suppressed. It is preferable that the distal end portions 43c of all the teeth 43 have substantially the same circumferential width. It is preferable that the distal end portions 43c of all the teeth 43 are arranged at regular intervals or at substantially regular intervals with respect to the circumferential direction. In other words, it is preferable that all the inter-tooth gaps d have the same value. It is preferable that all the magnetic pole faces have substantially the same circumferential width.

As shown in FIG. 8, the circumferential width La₄₃ of the main portion 43a is smaller than the axial thickness Lx of the main portion 43a of the tooth 43. Therefore, the circumferential width of the slot SL can be ensured widely. This makes it possible to further increase the number of turns of the winding or to adopt a wire having a larger diameter to form the winding. As a result, a higher torque and a higher output can be obtained. In the synchronous drive motor SG, the circumferential width L₄₃ of the distal end portion 43c of the tooth 43 is smaller than the axial thickness Lx of the distal end portion 43c of the tooth 43. Therefore, the inter-tooth gap d can be ensured widely. Such a wide inter-tooth gap d enables further improvement of the degree of freedom in the design of the winding W. This makes it possible, for example, to further increase the number of turns of the winding or to adopt a wire having a larger diameter to form the winding. As a result, a higher torque and a higher output can be obtained.

In the synchronous drive motor SG, the number of magnetic pole faces included in the rotor 30 is more than the number of teeth 43, and the angular velocity ω is high because the number of magnetic poles is large. The high angular velocity ω results in a low detent torque.

In the synchronous drive motor SG, the permanent magnet part 37 is formed of a ferrite magnet. Magnetic characteristics of the ferrite magnet are lower than the magnetic characteristics of a rare-earth magnet. Thus, the ferrite magnet has a larger thickness than the thickness of the rare-earth magnet, for example. In the synchronous drive motor SG, moreover, the number of magnetic pole faces is more than the number of teeth 43, so that the circumferential width L₃₇ of the magnetic pole face is small. A combination of the large thickness and the small circumferential width gives a high permeance coefficient to the permanent magnet part 37. Accordingly, a higher torque and a higher output can be obtained.

When the circumferential width L₄₃ of the distal end portion 43c decreases so that the inter-tooth gap d increases, the inductance L decreases (see FIG. 3(b)). In the synchronous drive motor SG, however, the number of magnetic poles included in the rotor 30 is more than the number of teeth included in the stator 40 so that the angular velocity ω is high, which ensures a value of the AC component ωL of the impedance. There is no need to decrease the number of turns of the winding W in order to suppress a power generation current. Therefore, even when the inter-tooth gap d is increased so that the value of the inductance L decreases, further improvement of a torque at a time of starting is achieved without the need to largely increase the power generation current.

In the synchronous drive motor SG of this embodiment, the controller supplies the drive current including the d-axis current component to the winding W. A voltage caused by the d-axis current component reduces an influence of the induced voltage caused at a time of rotation. As a result, a torque at a time of high-speed rotation is improved.

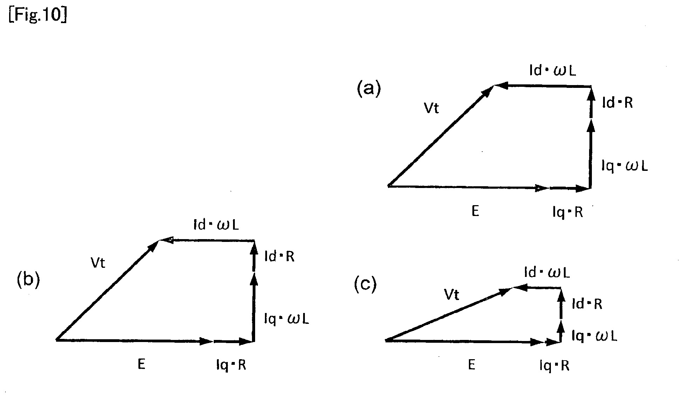

FIG. 10(a) is a vector diagram showing electrical characteristics in the synchronous drive motor SG of this embodiment. FIG. 10(b) is a vector diagram showing electrical characteristics in a conventional synchronous drive motor. FIG. 10(c) is a vector diagram showing electrical characteristics in a synchronous drive motor according to a comparative example.

In the synchronous drive motor SG of this embodiment shown in FIG. 10(a), the number of magnetic pole faces is 4/3 of the number of teeth. In the conventional synchronous drive motor shown in FIG. 10(b), the number of magnetic pole faces is 2/3 of the number of teeth. The angular velocity ω of the synchronous drive motor shown in FIG. 10(a) is twice the angular velocity ω of the conventional synchronous drive motor shown in FIG. 10(b).

In the synchronous drive motor SG of this embodiment shown in FIG. 10(a), as compared with the conventional synchronous drive motor shown in FIG. 10(b), the number of magnetic pole faces is larger, so that the circumferential width of the magnetic pole face is smaller. In the synchronous drive motor SG of this embodiment shown in FIG. 10(a), the circumferential width of the distal end portion of the tooth is smaller than the circumferential width of the magnetic pole face. In contrast, in the conventional synchronous drive motor shown in FIG. 10(b), as compared with the synchronous drive motor SG of this embodiment shown in FIG. 10(a), a greater value is set as the circumferential width of the distal end portion of the tooth. The inductance L of the synchronous drive motor of this embodiment is 1/2 of the inductance L of the conventional synchronous drive motor shown in FIG. 10(b).

In the synchronous drive motor shown in FIG. 10(c), the number of magnetic pole faces is 2/3 of the number of teeth. The angular velocity ω of the synchronous drive motor of this embodiment is twice the angular velocity ω of the synchronous drive motor according to the comparative example shown in FIG. 10(c).

In the synchronous drive motor according to the comparative example shown in FIG. 10(c), as compared with the conventional synchronous drive motor shown in FIG. 10(b), a lower value is set as the circumferential width of the distal end portion of the tooth. Accordingly, the inductance L of the synchronous drive motor shown in FIG. 10(c) is lower than the inductance L of the conventional synchronous drive motor shown in FIG. 10(b).

In each of the synchronous drive motors shown in FIG. 10(a) to FIG. 10(c), a drive current including a d-axis current component is supplied to the winding. In FIG. 10(a) to FIG. 10(c), the reference sign Vt denotes a terminal voltage of the synchronous drive motor. The reference sign E denotes an induced voltage. The reference sign Id denotes a d-axis (direct-axis) current. The reference sign Iq denotes a q-axis (quadrature-axis) current.

In general, the terminal voltage Vt of the synchronous drive motor has an upper limit because it is supplied from a power source such as a battery. An increase in the rotation speed of the rotor 30 leads to an increase in the induced voltage E of the winding W, which accordingly reduces a voltage margin for the supply of the q-axis current that contributes to the torque. In the synchronous drive motors shown in FIG. 10(a) to FIG. 10(c), the drive current including the d-axis current component is supplied to the winding. As a result, a voltage Id ·ωL directed to cancel the induced voltage E occurs as shown in FIG. 10(a). Therefore, even though the induced voltage E is increased, the q-axis current that contributes to the torque can be supplied to the winding. In the examples shown in FIG. 10(a) to FIG. 10(c), the induced voltage E is higher than the terminal voltage Vt of the synchronous drive motor, but the q-axis current is supplied to the winding.

The angular velocity ω and the inductance L of the synchronous drive motor SG of this embodiment shown in FIG. 10(a) are twice the angular velocity ω and 1/2 of the inductance L of the conventional synchronous drive motor shown in FIG. 10(b). As a consequence, a voltage component (Id ·ωL) that suppresses an induced voltage is the same in the synchronous drive motor SG of this embodiment shown in FIG. 10(a) and in the conventional synchronous drive motor shown in FIG. 10(b). In other words, in the synchronous drive motor of this embodiment, the circumferential width of the distal end portion of the tooth is small so that the inductance L is low, but the angular velocity ω is high so that the voltage component (Id ·ωL) directed to cancel the induced voltage is ensured.

The angular velocity ω of the synchronous drive motor SG of this embodiment shown in FIG. 10(a) is twice the angular velocity ω of the synchronous drive motor according to the comparative example shown in FIG. 10(c). The inductance L of the synchronous drive motor SG of this embodiment shown in FIG. 10(a) is almost at the same level as the inductance L of the synchronous drive motor according to the comparative example shown in FIG. 10(c). This is why, in the synchronous drive motor according to the comparative example shown in FIG. 10(c), the voltage component (Id ·ωL) that suppresses the induced voltage is reduced. As a result, the q-axis current is reduced, too.

In the synchronous drive motor SG of this embodiment, on the other hand, the number of magnetic pole faces included in the rotor 30 is more than the number of teeth, so that the angular velocity ω is high. Even when the d-axis current is low, the high angular velocity ω ensures the voltage component (Id ·ωL) that suppresses the induced voltage. Therefore, even though the induced voltage E is increased, the q-axis current that contributes to the torque can be supplied to the winding. Accordingly, the synchronous drive motor SG improves a torque at a time of high-speed rotation. As a method for supplying a drive current including a d-axis current component, for example, supplying a specified amount of d-axis current component based on a vector control (field-oriented control) or performing an advance angle control that substantially supplies a d-axis current component by advancing the phase of a drive current, are adoptable. A method for the advance angle control is not particularly limited, and a conventionally known method is adoptable.

In the synchronous drive motor SG, as described above, the winding W is wound on the tooth 43. The winding W is arranged so as to be extending through the slot SL. In other words, a part of the winding W is in the slot SL. In the synchronous drive motor SG, the circumferential width L₄₃ of the distal end portion 43c of the tooth 43 is small so that the inter-tooth gap d is large, and therefore the degree of freedom of the design of the winding is high. A manner in which the winding W is wound may be either of concentrated winding and distributed winding. Although no particular limitation is put on the winding manner, the concentrated winding is preferable. An exemplary configuration of the winding W is as follows.

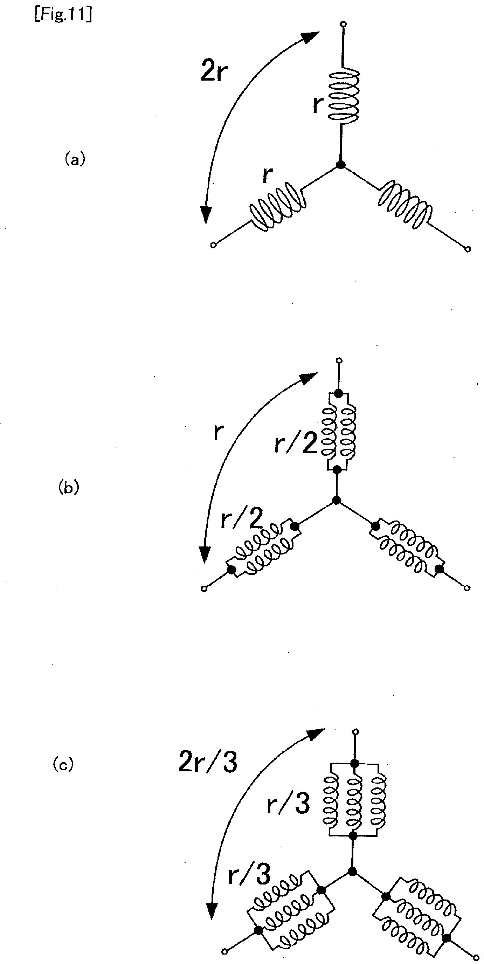

FIG. 11(a) to FIG. 11(c) are diagrams each schematically showing an example of connection of the windings W.

FIG. 11(a) shows star-connection (Y-connection). When a DC resistance of each phase is defined as r, a phase-to-phase resistance R is expressed as R = r+r = 2r. FIG. 11(b) shows parallel connection in which the winding of each phase shown in FIG. 11(a) includes two windings and the two windings are connected in parallel. The phase-to-phase resistance R is expressed as R = r/2+r/2 = r. FIG. 11(c) shows parallel connection in which the winding of each phase shown in FIG. 11(a) includes three windings and the three windings are connected in parallel. The phase-to-phase resistance R is expressed as R = r/3+r/3 = 2r/3.

In the present invention, any of the configurations shown in FIG. 11(a) to FIG. 11(c) is adoptable. In the present invention, however, the parallel connection is preferable in which the winding of each phase includes a plurality of windings that are connected in parallel. The reason therefor will be described below.

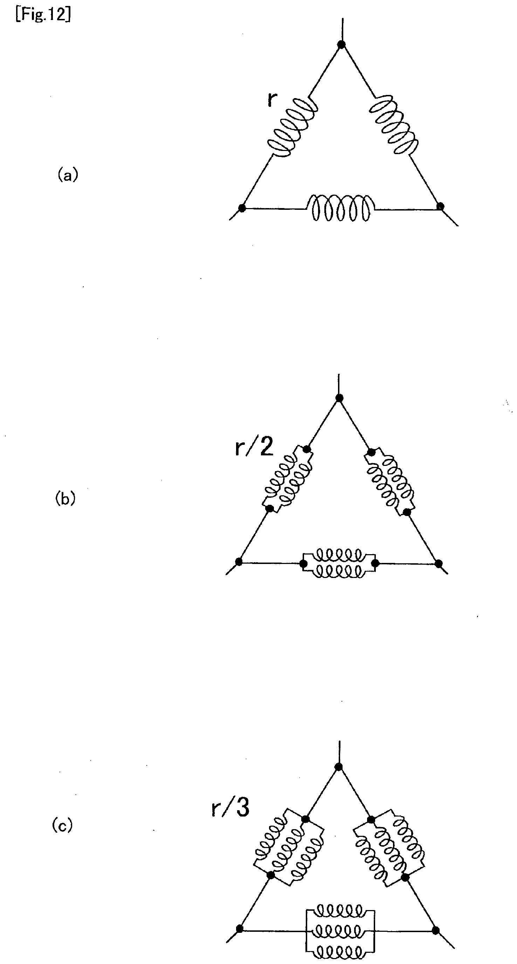

The present inventors have found out that a reduction in the DC resistance R in the impedance makes a relatively large contribution to improvement of the torque in a low-speed rotation region. Thus, setting the DC resistance R to a small value while setting the ωL to a large value as described above can more effectively ensure a high output torque in the low-speed rotation region. The parallel connection, in which the winding of each phase includes a plurality of windings that are connected in parallel as shown in FIG. 11(b) and FIG. 11(c), reduces the DC resistance R. As a result, a high output torque in the low-speed rotation region can be ensured more effectively. The number of windings that are connected in parallel is not limited to two and three. Four or more windings may be connected in parallel. It may be acceptable that both parallel connection and series connection exist in the winding of each phase. For example, it may be acceptable that the winding of each phase includes a plurality of winding sets in each of which a plurality of windings are connected in parallel, and the plurality of winding sets are connected in series with one another. The connection of the windings W is not limited to the examples shown in FIG. 11(a) to FIG. 11(c). Examples shown in FIG. 12(a) to FIG. 12(c) are also adoptable.

FIG. 12(a) to FIG. 12(c) are diagrams each schematically showing an example of connection of windings.

FIG. 12(a) shows delta-connection (Δ-connection). FIG. 12(b) shows parallel connection in which the winding of each phase shown in FIG. 12(a) includes two windings and the two windings are connected in parallel. FIG. 12(c) shows parallel connection in which the winding of each phase shown in FIG. 12(a) includes three windings and the three windings are connected in parallel. In a case of the delta-connection, the DC resistance R can be reduced because of the parallel connection in which the winding of each phase includes a plurality of windings that are connected in parallel, as in a case of the star-connection. The number of windings that are connected in parallel is not limited to two and three. Four or more windings may be connected in parallel.

In the present invention, either of the star-connection and the delta-connection is suitably adoptable, but the star-connection is more preferable for the following reasons: a circulating current is less likely to occur even when a difference in the induced voltage between the phases is caused due to, for example, the positional relationship of the stator 40 relative to the rotor 30 and a difference in the intensity of the magnetic pole of the permanent magnet. Thus, the star-connection is less likely to cause a loss in power generation and enables more effective suppression of occurrence of an efficiency drop. In the present invention, the method for setting the DC resistance R in the impedance to a small value is not limited to the parallel connection mentioned above. For example, adoption of a winding whose cross-section has a large minimum width is conceivable. Since the winding W is arranged so as to be through the slot SL, the minimum width of the cross-section of the winding W can be increased within a range that allows the winding W to be through the slot SL.

In a normal electric motor, from the viewpoint of improvement of an output, it is preferable that the number of turns of a winding arranged so as to be through a slot (the number of times the winding is wound) is large so that the space factor of the winding within the slot is high. In a normal power generator as well, from the viewpoint of power generation efficiency, it is preferable that the number of turns of a winding arranged so as to be through a slot is large so that the space factor of the winding within the slot is high. Therefore, in the normal electric motor and power generator, the ratio of the minimum width (mm) of the cross-section of the winding to the inter-tooth gap d (mm) between distal end portions of teeth has been set to a low value.

In contrast, in the synchronous drive motor SG according to this embodiment, the rotor 30 has the magnetic pole faces that are formed on the inner circumferential surfaces of the permanent magnet parts 37 with respect to the radial direction of the synchronous drive motor SG and that are arranged side by side in the circumferential direction of the synchronous drive motor SG, and the number of the magnetic pole faces is more than the number of teeth 43. The synchronous drive motor SG has many magnetic pole faces that are arranged radially outward of the stator 40. The synchronous drive motor SG having such a configuration is able to ensure a higher output torque at a time of starting, at which the rotation speed is low, by increasing the minimum width (mm) of the cross-section of the winding relative to the inter-tooth gap d (mm) between the distal end portions 43c of the teeth 43. Increasing the minimum width of the cross-section of the winding relative to the inter-tooth gap d (mm) between the distal end portions 43c of the teeth 43 results in a reduction in the DC resistance R, which may cause a risk that the power generation current may increase when the synchronous drive motor SG functions as a generator. However, since the angular velocity ω is increased, the impedance at a time of high-speed rotation is ensured, and therefore an increase in the power generation current can be suppressed. Accordingly, both an increase in the output torque and suppression of the power generation current can be achieved.

In the synchronous drive motor SG according to this embodiment, the DC resistance R of the winding W can be reduced by adoption of the parallel connection or a wire having a large diameter. Therefore, a loss caused when a current flows through the winding can be reduced. For example, in a case where the synchronous drive motor SG functions as a generator, a current I flows through the winding W to cause a loss (I²R), but the low DC resistance R of the winding W can suppress the loss. Accordingly, a high efficiency is obtained when the synchronous drive motor SG functions as a generator.

To be specific, the ratio of the minimum width (mm) of the cross-section of the winding W to the inter-tooth gap d (mm) between the distal end portions 43c of the teeth 43 is preferably 0.1 or more, more preferably 0.16, further preferably 0.3 or more, and particularly preferably 1/3 or more. In case where the cross-sectional shape of the winding W is a true circle, the diameter of the winding W is equivalent to the minimum width of the cross-section of the winding W. In a case where the cross-sectional shape of the winding W is an ellipse, the shorter diameter of the winding W is equivalent to the minimum width of the cross-section of the winding W. In a case where the winding W is formed of a flat rectangular wire, the length of the shorter side of the rectangular cross-section of the winding W is equivalent to the minimum width of the cross-section of the winding W. It may be acceptable to reduce the DC resistance R in the impedance by adopting a winding made of a material having a low DC resistance.

In the example having been described with reference to FIGS. 7 and 9, the distal end portion 43c of the tooth 43 is a portion of the tooth 43 having a maximum circumferential width. Alternatively, the synchronous drive motor of the present invention may be configured such that the circumferential width of the distal end portion of the tooth is equal to or less than the circumferential width of a portion of the tooth having a maximum circumferential width. Alternatively, the synchronous drive motor of the present invention may be configured such that the circumferential width of the distal end portion of the tooth is less than the circumferential width of a portion of the tooth having a maximum circumferential width. In such a case, the inter-tooth gap is large, and thus the degree of freedom in the design of the winding is further improved. For example, further increasing the number of turns of the winding or adopting a wire having a larger diameter is allowed. Accordingly, a higher torque and a higher output can be obtained.

The above-described embodiment adopts a ferrite magnet for the permanent magnet part. In the synchronous drive motor of the present invention, a rare-earth magnet is also adoptable for the permanent magnet part. For example, a Neodymium bonded magnet, a samarium-cobalt magnet, a neodymium magnet, and the like, are adoptable for the permanent magnet part. Since a rare-earth magnet has high magnetic characteristics, the thickness thereof is small. On the condition that the size of the synchronous drive motor is constant, providing a larger number of magnetic pole faces than the number of teeth results in a smaller circumferential width of the magnetic pole face. An effect that the permeance coefficient is increased due to the small circumferential width of the magnetic pole face is highly exerted in a magnet having a small thickness. Use of a rare-earth magnet having high magnetic characteristics and obtaining of the effect of a high permeance coefficient are achieved. Accordingly, a high torque, a high output, and downsizing can be satisfied at a higher level.

In the synchronous drive motor described above, the permanent magnet part is arranged radially outside the stator.

The above-described embodiment illustrates, as an example of the synchronous drive motor of the present invention, a synchronous drive motor for starting an engine. The synchronous drive motor of the present invention is able to satisfy a high torque, a high output, and downsizing at a high level. Therefore, the synchronous drive motor of the present invention is suitable for use in a situation where the synchronous drive motor is driven by a battery. The synchronous drive motor of the present invention is suitable for use in a situation where it is mounted in an engine unit. The object to be driven is a crankshaft of an engine.

Although the above-described embodiment illustrates the synchronous drive motor SG that functions as a generator, this is not limiting. The synchronous drive motor of the present invention may function as a motor only.

Although the above-described embodiment illustrates the synchronous drive motor SG including six or more teeth 43, this is not limiting. The synchronous drive motor of the present invention may include five or less teeth.

Although the above-described embodiment illustrates the example in which the axial thickness Lx of the distal end portion 43c of the tooth 43 is larger than the circumferential width L₄₃ thereof, this is not limiting. The synchronous drive motor of the present invention may be configured such that the axial thickness of the distal end portion may be smaller than the circumferential width thereof.

Although the above-described embodiment illustrates the example in which each of the teeth 43 has the lateral protruding portions 43b that protrude from the main portion 43a toward opposite sides of the main portion 43a with respect to the circumferential direction, this is not limiting. The synchronous drive motor of the present invention may be configured such that each of the teeth has no portion protruding toward opposite sides of the tooth with respect to the circumferential direction.

The above-described embodiment illustrates the example in which, when viewed along the rotation axis, the outer edge Ws of the winding wound on the tooth with respect to the circumferential direction is located outer than the outer edge of the distal end portion 43c of the tooth 43 with respect to the circumferential direction.

It should be understood that the terms and expressions used herein are for descriptions and have no intention to be construed in a limited manner, do not eliminate any equivalents of features shown and mentioned herein, and allow various modifications falling within claim 1 of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the definition of claim 1. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### Reference Signs List

- 30: rotor
- 37: permanent magnet part
- 40: stator
- 43: tooth
- 43c: distal end portion
- SG: synchronous drive motor
- SL: slot
- ST: stator core
- W: winding
- D: inter-tooth gap

## Claims

1. An engine unit (EU) mountable in a vehicle comprising:
an engine body (E) and
a drive unit for driving the engine body (E),
the drive unit comprising:
a synchronous drive motor (SG) and
a control device,
the synchronous drive motor (SG) comprising:
a stator (40) including a stator core (ST) and windings (W), the stator core (ST) including a plurality of teeth (43) that are spaced from each other by a slot (SL) formed therebetween with respect to a circumferential direction, the winding extending through the slot (SL), each of the plurality of teeth (43) including a portion wound with the winding (W); and
a rotor (30) including a permanent magnet part (37) that forms a plurality of magnetic pole faces, the plurality of magnetic pole faces being provided on a surface of the rotor (30) opposed to the stator (40), the permanent magnet part (37) is arranged radially outside the stator (40),
each of the plurality of teeth (43) including a distal end portion (43c) that is opposed to the magnetic pole face arranged radially outside the stator (40), the distal end portion (43c) having a larger axial thickness than the circumferential width of the distal end portion (43c), an interval between the distal end portions (43c) of the teeth (43) adjacent to each other with respect to the circumferential direction is an inter-tooth gap (d), the inter-tooth gap is equal to or less than a distance (D2) between the winding (W) and a back yoke part (34) with respect to a radial direction of the synchronous drive motor (SG), the distal end portion (43c) having a smaller circumferential width than a circumferential width of the magnetic pole face, the number of the magnetic pole faces being equal to or more than 4/3 of the number of the teeth (43),
wherein when the distal end portion (43c) is viewed along a rotation axis of the synchronous drive motor (SG), an outer edge of the winding (W) wound on the tooth (43) with respect to the circumferential direction is located outer than an outer edge of the distal end portion (43c) of the tooth (43) with respect to the circumferential direction.

2. The engine unit (EU) according to claim 1, wherein
the stator core (ST) includes six or more teeth (43).

3. The engine unit (EU) according to any one of claims 1 and 2, wherein the permanent magnet part (37) is formed of a rare-earth magnet.

4. The engine unit (EU) according to any one of claims 1 and 2, wherein the permanent magnet part (37) is formed of a ferrite magnet.

5. The engine unit (EU) according to any of claims 1 to 4, wherein the control device is configured to supply, to the winding (W), a drive current that includes a d-axis current component.

## Patentansprüche

1. Eine in einem Fahrzeug montierbare Motoreinheit (EU), die folgende Merkmale aufweist:
einen Motorkörper (E), und
eine Antriebseinbeit zum Antreiben des Motorkörpers (E),
wobei die Antriebsanheit folgende Merkmale aufweist:
einen Synchronantriebsmotor (SG) und
eine Steuereinheit,
wobei der Synchronantriebsmotor (SG) folgende Merkmale aufweist:
einen Stator (40), der einen Statorkern (ST) und Wicklungen (W) umfasst, wobei der Statorkern (ST) eine Mehrzahl von Zähnen (43) umfasst, die voneinander durch einen dazwischen gebildeten Spalt (SL) in Bezug auf eine Umfangsrichtung beabstanded sind, wobei sich die Wicklung durch den Spalt (SL) erstreckt, wobei jeder der Mehrzahl von Zähnen (43) einen mit der Wicklung (W) gewickelten Abschnitt umfasst; und
einen Rotor (30), der ein Permanentmagnetteil (37) umfasst, welches eine Mehrzahl von Magnetpolflächen bildet, wobei die Mehrzahl von Magnetpolflächen auf einer Oberfläche des Rotors (30) gegenüberliegend zu dem Stator (40) bereitgestellt ist, wobei das Permanentmagnetteil (37) radial außerhalb des Stators (40) angeordnet ist,
wobei jeder der Mehrzahl von Zähnen (43) einen distalen Endabschnitt (43c) umfasst, welcher der radial außerhalb des Stators (40) angeordneten Magnetpolfläche gegenüberliegt, wobei der distale Endabschnitt (43c) eine axiale Dicke aufweist, die größer ist als die Umfangsbreite des distalen Endabschnitts (43c), wobei ein Abstand zwischen den distalen Endabschnitten (43c) der Zähne (43), die in Bezug auf die Umfangsrichtung benachbart sind, eine Zwischenzahnlücke (d) ist, wobei die Zwischenzahnlücke in Bezug auf eine Radialrichtung des Synchronantriebsmotors (SG) gleich groß wie oder kleiner als eine Strecke (D2) zwischen der Wicklung (W) und einem Rückjochteil (34) ist, wobei der distale Endabschnitt (43c) eine Umfangsbreite aufweist, die kleiner ist als eine Umfangsbreite der Magnetpolfläche, wobei die Anzahl an Magnetpolflächen gleich oder größer als 4/3 der Anzahl der Zähne (43) ist,
wobei sich bei Betrachtung des distalen Endabschnitts (43c) entlang einer Drehachse des Synchronantriebsmotors (SG) ein Außenrand der auf dem Zahn (43) gewickelten Wicklung (W) in Bezug auf die Umfangsrichtung weiter außen befindet als ein Außenrand des distalen Endabschnittes (43c) des Zahnes (43) in Bezug auf die Umfangsrichtung.

2. Die Motoreinheit (EU) gemäß Anspruch 1, wobei der Statorkern (ST) sechs oder mehr Zähne (43) umfasst.

3. Die Motoreinheit (EU) gemäß einem der Ansprüche 1 und 2, wobei das Permanentmagnetteil (37) aus einem Seltene-Erde-Magnet gebildet ist.

4. Die Motoreinheit (EU) gemäß einem der Ansprüche 1 und 2, wobei das Permanentmagnetteil (37) aus einem Ferritmagnet gebildet ist.

5. Die Motoreinheit (EU) gemäß einem der Ansprüche 1 bis 4, wobei die Steuervorrichtung dazu ausgebildet ist, der Wicklung (W) einen Antriebsstrom zuzuführen, welcher eine D-Achse-Stromkomponente umfasst.

## Revendications

1. Unité de moteur (EU) pouvant être montée dans un véhicule, comprenant:
un corps de moteur (E), et
une unité d'entraînement destinée à entraîner le corps de moteur (E),
l'unité d'entraînement comprenant:
un moteur d'entraînement synchrone (SG), et
un dispositif de commande,
le moteur d'entraînement synchrone (SG) comprenant:
un stator (40) comportant un noyau de stator (ST) et des enroulements (W), le noyau de stator (ST) comportant une pluralité de dents (43) qui sont espacées l'une de l'autre par une fente (SL) formée entre elles par rapport à un direction circonférentielle, l'enroulement s'étendant à travers la fente (SL), chacune de la pluralité de dents (43) comportant une partie enroulée ensemble avec l'enroulement (W); et
un rotor (30) comportant une partie d'aimant permanent (37) qui forme une pluralité de faces de pôle magnétique, la pluralité de faces de pôle magnétique étant prévues sur une surface du rotor (30) opposée au stator (40), la partie d'aimant permanent (37) est disposée radialement à l'extérieur du stator (40),
chacune de la pluralité de dents (43) comportant une partie d'extrémité distale (43c) qui est opposée à la face de pôle magnétique disposée radialement à l'extérieur du stator (40), la partie d'extrémité distale (43c) présentant une épaisseur axiale plus grande que la largeur circonférentielle de la partie d'extrémité distale (43c), un intervalle entre les parties d'extrémité distale (43c) des dents (43) adjacentes l'une à l'autre par rapport à la direction circonférentielle est un espace entre dents (d), l'espace entre dents est égale ou inférieure à une distance (D2) entre l'enroulement (W) et une partie de culasse arrière (34) par rapport à une direction radiale du moteur d'entraînement synchrone (SG), la partie d'extrémité distale (43c) présentant une largeur circonférentielle plus petite qu' une largeur circonférentielle de la face de pôle magnétique, le nombre de faces de pôle magnétique étant égal ou supérieur à 4/3 du nombre de dents (43),
dans lequel, lorsque la partie d'extrémité distale (43c) est vue le long d'un axe de rotation du moteur d'entraînement synchrone (SG), un bord extérieur de l'enroulement (W) enroulé sur la dent (43) par rapport à la direction circonférentielle est situé plus à l'extérieur qu'un bord extérieur de la partie d'extrémité distale (43c) de la dent (43) par rapport à la direction circonférentielle.

2. Unité de moteur (EU) selon la revendication 1, dans lequel le noyau de stator (ST) comporte six dents ou plus (43).

3. Unité de moteur (EU) selon l'une quelconque des revendications 1 et 2, dans lequel la partie d'aimant permanent (37) est formée d'un aimant en terres rares.

4. Unité de moteur (EU) selon l'une quelconque des revendications 1 et 2, dans lequel la partie d'aimant permanent (37) est formée d'un aimant en ferrite.

5. Unité de moteur (EU) selon l'une quelconque des revendications 1 à 4, dans lequel le dispositif de commande est configuré pour alimenter, vers l'enroulement (W), un courant de commande qui comporte une composante de courant d'axe d.
